# EUROPEAN PATENT APPLICATION

(11) **EP 4 675 487 A1**
(43) Date of publication of application: **07.01.2026**
(21) Application number: 25187470.7
(22) Date of filing: 04.07.2025
(51) Int. Cl.: G06F 30/18, G06T 19/00, G06T 19/20, G06F 113/16

(54) **UPDATE FLATTENED ROUTE FOR CHANGES IN ROUTE LENGTH IN 3D ROUTE DESIGN**

(30) Priority: 04.07.2024 IN 202411051266
(71) Applicant: Dassault Systemes Solidworks Corporation, Waltham, MA 02451 (US)
(72) Inventor: Zolekar, Vivek, Waltham, 02451 (US); Patil, Satyajeet, Waltham, 02451 (US); Shirkey, Nitin, Waltham, 02451 (US)
(74) Representative: Bandpay & Greuter

(57) **Abstract**

A computer-based method includes generating, in a virtual two-dimensional viewing environment, a flattened, two-dimensional visual representation of an initial three-dimensional model of a wiring harness based on user input. The two-dimensional representation of the initial model has an initial visual layout. The method includes subsequently modifying the initial three-dimensional model to generate a modified three-dimensional model in response to additional user input. Specifically, at least one route segment in the wiring harness in the modified model has a different length than the corresponding route segment in the initial model. The method then includes generating, in the virtual two-dimensional viewing environment, a flattened, two-dimensional visual representation of the modified three-dimensional model. The flattened two-dimensional visual representation of the modified model has the route segment length of the modified three-dimensional model but otherwise preserves the visual layout of the flattened, two-dimensional representation of the initial three-dimensional model.

## Description

### CROSS-REFERENCE TO RELATED APPLICATION(S)

This application claims the benefit of priority to Indian Patent Application No. 202411051266 entitled Update Flattened Route for changes in Route Length in 3D Route design, which was filed on July 4, 2024. The disclosure of the prior application is incorporated by reference herein in its entirety.

### FIELD OF THE INVENTION

This disclosure relates to the field of computer aided design (CAD) of real world objects, such as wiring harnesses or the like and, more specifically, computer-implemented systems and techniques for updating a flattened, two-dimensional version of a model in view of changes (e.g., changes in route segment length) to the model made in a virtual three-dimensional modeling environment.

### BACKGROUND

Wiring harness design involves planning, creating, and documenting the arrangement of wires, cables, connectors, etc. within a system to deliver electrical power and data signals safely and effectively. It generally involves creating a physical layout, selecting appropriate components, and ensuring the harness integrates seamlessly with its environment and other nearby systems and components. As discussed herein, the design process may include creating a three-dimensional model of the wiring harness in a virtual three-dimensional modeling environment. A formboard is a digital representation of a wiring harness, typically derived from a model of the wiring harness, that may be used by a manufacture to manufacture the modeled wiring harness.

The process of designing such models and generating formboard drawings (or other digital representations for manufacturing) from the models has proven complex, cumbersome, inefficient, costly, and prone to errors. Improvements would be helpful.

### SUMMARY OF THE INVENTION

In one aspect, a computer-based method includes generating, in a virtual two-dimensional viewing environment, a flattened, two-dimensional visual representation of an initial three-dimensional model of a wiring harness based on user input. The two-dimensional representation of the initial model has an initial visual layout. The method includes subsequently modifying the initial three-dimensional model to generate a modified three-dimensional model in response to additional user input. Specifically, at least one route segment in the wiring harness in the modified model has a different length than the corresponding route segment in the initial model. The method then includes generating, in the virtual two-dimensional viewing environment, a flattened, two-dimensional visual representation of the modified three-dimensional model. The flattened two-dimensional visual representation of the modified model has the route segment length of the modified three-dimensional model but otherwise preserves the visual layout of the flattened, two-dimensional representation of the initial three-dimensional model.

In another aspect, a system is disclosed that includes a computer with a computer processor, and computer-based memory operatively coupled to the computer processor. The computer-based memory stores computer-readable instructions that, when executed by the computer processor, cause the computer system to perform a process that includes generating, in a virtual two-dimensional viewing environment, a flattened, two-dimensional visual representation of an initial three-dimensional model of a wiring harness based on user input. The two-dimensional representation of the initial model has an initial visual layout. The method includes subsequently modifying the initial three-dimensional model to generate a modified three-dimensional model in response to additional user input. Specifically, at least one route segment in the wiring harness in the modified model has a different length than the corresponding route segment in the initial model. The method then includes generating, in the virtual two-dimensional viewing environment, a flattened, two-dimensional visual representation of the modified three-dimensional model. The flattened two-dimensional visual representation of the modified model has the route segment length of the modified three-dimensional model but otherwise preserves the visual layout of the flattened, two-dimensional representation of the initial three-dimensional model.

In yet another aspect, a non-transitory computer readable medium is disclosed that has stored thereon computer-readable instructions that, when executed by a computer-based processor, cause the computer-based processor to perform the above-method ; in example, the method includes generating, in a virtual two-dimensional viewing environment, a flattened, two-dimensional visual representation of an initial three-dimensional model of a wiring harness based on user input. The two-dimensional representation of the initial model has an initial visual layout. The method includes subsequently modifying the initial three-dimensional model to generate a modified three-dimensional model in response to additional user input. Specifically, at least one route segment in the wiring harness in the modified model has a different length than the corresponding route segment in the initial model. The method then includes generating, in the virtual two-dimensional viewing environment, a flattened, two-dimensional visual representation of the modified three-dimensional model. The flattened two-dimensional visual representation of the modified model has the route segment length of the modified three-dimensional model but otherwise preserves the visual layout of the flattened, two-dimensional representation of the initial three-dimensional model.

In still another aspect, there is provided a computer program product configured to be operable to cause a computer to perform a process that includes generating, in a virtual two-dimensional viewing environment, a flattened, two-dimensional visual representation of an initial three-dimensional model of a wiring harness based on user input. The two-dimensional representation of the initial model has an initial visual layout. The method includes subsequently modifying the initial three-dimensional model to generate a modified three-dimensional model in response to additional user input. Specifically, at least one route segment in the wiring harness in the modified model has a different length than the corresponding route segment in the initial model. The method then includes generating, in the virtual two-dimensional viewing environment, a flattened, two-dimensional visual representation of the modified three-dimensional model. The flattened two-dimensional visual representation of the modified model has the route segment length of the modified three-dimensional model but otherwise preserves the visual layout of the flattened, two-dimensional representation of the initial three-dimensional model.

In some implementations, one or more of the following advantages are present.

For example, in various implementations, changes made to a route segment on a three-dimensional model of a wiring harness may be reciprocated (e.g., incorporated) into its flattened configuration while preserving and not significantly disturbing the visual layout of (and any previous edits made to the visual layout of) a prior iteration of the flattened configuration (e.g., in a formboard drawing). Thus, certain limitations in prior systems may be overcome by maintaining the previous edits in the 2D flattened route. Typical implementations may improve the accuracy of the update mechanism on the 2D flattening side whenever there are changes done on the 3D Route assembly. This may result in improved readability and cleanliness of a flatten harness visual layout, regardless of iterative model updates. Various implementations of the systems and techniques disclosed herein may enable improved design lead-time before finalizing electrical harness flattened formboard designs.

Other features and advantages will be apparent from the description and drawings, and from the claims.

### BRIEF DESCRIPTION OF THE DRAWINGS

FIG. 1 shows a series of images with varying views of a relatively simple electrical wiring harness assembly design.
FIG. 2 shows an example of a change being made in one of the iterations represented in the images of the three-dimensional wiring harness model of FIG. 1 and how that change in the three-dimensional wiring harness model may affect the appearance of the corresponding two-dimensional version of the model when the changed version of the three-dimensional wiring harness model is once again flattened.
FIG. 3 is a schematic representation of an exemplary computer 100 configured to implement the systems and functionalities disclosed herein.
FIG. 4 is a detailed visual representation of the three-dimensional wiring harness model from the *Electrical Harness Assembly 3D* image in FIG. 1.
FIG. 5 is a visual representation of the flattened two-dimensional version of the wiring harness model from the *Iteration 4: Added Bend* image in FIG. 1.
FIGS. 6 and 8 are flowcharts showing an implementation of a computer-implemented process.
FIG. 7 is a schematic representation of an implementation of computer-implemented processes disclosed herein.
FIG. 9 is a schematic representation of an implementation of computer-implemented processes disclosed herein.
FIG. 10 is a schematic representation of exemplary results that may be achieved with implementations of the computer processes disclosed herein.

Like reference characters refer to like elements.

### DETAILED DESCRIPTION

This document uses a variety of terminology to describe its inventive concepts. The terminology should be given its ordinary meaning and, unless otherwise indicated, may be understood as having meanings that are consistent with what follows.

For example, in general, the phrase, "computer-aided design" (or CAD) refers to the use of computers (or workstations) to aid in the creation, modification, analysis, or optimization of a design. A "design" refers to a plan or specification (e.g., drawing), typically stored in computer-based memory, for an object or system, including construction details for that object or system. The SOLIDWORKS^{®} computer program, available from Dassault Systèmes SolidWorks Corporation, the applicant of the current application, is one example of a CAD software program. As used herein, the phrase "computer-aided design" or CAD should be construed broadly to include any computer software, device, or system that incorporates or can incorporate electrical harness assembly design flattening capabilities.

The phrase "wiring harness" (or "electrical harness," "cable harness," "wire harness," "cable assembly," "wiring assembly," or the like) refers to an assembly of electrical cables or wires that can transmit electrical signals and/or power. The cables or wires may be bound together, along at least certain extents of the electrical harness, by a durable material such as rubber, vinyl, electrical tape, conduit a weave of extruded string, or a combination thereof.

The term "model" or the phrase "three-dimensional model" generally refer to a digital or virtual representation of a physical, real world object (such as a wiring harness) or system. Typically, models, including three-dimensional models, are created using computer-aided design (CAD) software. A typical model will include information about the object's geometry, dimensions, and potentially other information, such as material and/or material characteristics. For example, in an exemplary implementation, a model may include a digital or virtual representation of an associated real world object (e.g., wiring harness), including details about route segments that make up the wiring harness. Such details may include, for each wiring harness, one or more data structures stored in computer memory and representing / identifying route segment names, lengths, start points, end points, associated sketch segments, etc. In a typical implementation, a computer, executing the CAD software, may display a three-dimensional, scaled visualization of the object or system being designed, and provide that user with interface elements that facilitate model creation and/or editing.

The phrase "flattening" refers to a computer-implemented process whereby a virtual three-dimensional (3D) model of an object (e.g., a wiring harness) is converted into a flattened two-dimensional (2D) version of the model in a virtual environment. "Flattening" a model of a "wiring harness" refers to a computer-implemented process by which a 3D model of the wiring harness, or a portion thereof, is converted into a 2D version of the wiring harness model in a virtual (e.g., CAD) environment. In a typical implementation, the length of each route segment in the 3D wiring harness model, for example, is brought into the 2D version of the 3D model during the flattening process.

A "route segment" refers to a portion of a wiring harness that extends, typically, between two distinct junction points of the wiring harness. A route segment in a may include one or more sketch segments. A "sketch segment" may include a spline, a line, an arc, or a curve. A route segment may be represented in computer memory by data structure(s) that define one or more route properties. A "junction point" is a point on a wiring harness where multiple route segments merge, or where multiple individual wires merge into a bound section of the wiring harness. Every route segment has a "route segment length" that is the sum of all lengths of the sketch segments that make up the route segment. Every route segment has a "start point" and an "end point" and the sketch segments that make up the route segment typically extend between the start point and the end point.

The phrase "visual layout" typically refers to the spatial configuration or arrangement of the visual elements in a flattened two-dimensional (2D) version of a 3D model on a two-dimensional plane (e.g., a virtual two-dimensional environment or a real world two-dimensional substrate). Although the visual representation of the flattened two-dimensional (2D) version of the 3D model shows the physical details of the 3D model, the concept of a "visual layout" of the flattened two-dimensional (2D) version of the 3D model should be considered a concept that is distinct from the 3D model itself. As discussed herein, when a 3D model is first flattened, the resulting flattened, 2D version of the model may have a default visual layout. That default visual layout may be editable by a designer (e.g., by adding or removing bends, modifying angles, straightening lines, adjusting fanouts, flipping route segments, etc.). Any changes to the visual layout of the flattened, 2D version of the model do not affect the 3D model itself.

The phrase "processor" or the like refers to any one or more computer-based processing devices. A computer-based processing device is a physical component that can perform computer functionalities by executing computer-readable instructions stored in memory.

The phrase "memory" or the like refers to any one or more computer-based memory devices. A computer-based memory device is a physical component that can store computer-readable instructions that, when executed by a processor, results in the processor performing associated computer functionalities.

### Technical Disclosure

This disclosure relates to the design and manufacturing of certain types of real world objects, such as electrical wiring harness assemblies ("wiring harnesses") or the like, where the design process occurs in a computer-implemented virtual design environment. Wiring harnesses may be used in a wide variety of different industries and applications including, for example, in automobiles, aircrafts, ships, trains, industrial machinery, consumer electronics and appliances, medical devices, the military and defense industry, etc. Typically, a wiring harness is an assembly of electrical wires or cables that can transmit signals or electrical power. The wires or cables may be bound together (e.g., by a durable material such as rubber, vinyl, etc.). The process of designing a wiring harness typically includes both electrical and mechanical design. The electrical design portion of this process typically focuses on ensuring that the electrical characteristics of the wiring harness are sufficient to satisfy the electrical requirements of the wiring harness. The mechanical design portion of the process typically focuses on ensuring that the physical parameters of the wiring harness are adequate to satisfy the physical requirements of the wiring harness. The mechanical design portion of the process typically involves specifying an intended physical configuration of the wiring harness including, for example, path definitions, route segment start points, route segment end points, route segment lengths, etc.

Typically, the design process is an iterative one, with design changes being made in response to new realizations and/or new information being learned about the electrical or mechanical requirements for the wiring harness being designed. Designers typically use computer software to facilitate wiring harness design. One example of software that traditionally has been used in connection with designing wiring harnesses is SOLIDWORKS^{®} computer aided design software, available from Dassault Systemes Solidworks Corporation, particularly incorporating a Routing^{™} add-in, which also is available from Dassault Systemes Solidworks Corporation. Computer systems, executing such software, may be adapted in accordance with the systems and processes disclosed herein, to enhance the effectiveness and efficiency of the design process when using such an adapted system.

In a typical implementation, such a system may provide a designer with access to a virtual three-dimensional modeling environment, where the designer can create and modify a three-dimensional model that represents the physical configuration of a wiring harness. The system also typically provides the designer with access to a functionality that flattens the three-dimensional model to produce a flattened, virtual two-dimensional representation of the wiring harness based on the three-dimensional model. This flattening functionality is desirable because it is generally easier to understand what needs to be manufactured when looking at a flattened, two-dimensional image of a wiring harness, as compared to looking at a three-dimensional model of the wiring harness. The flattening functionality, therefore, gives the designer an easy and convenient way to produce the types of flattened two-dimensional drawings that manufacturers prefer from the three-dimensional models that the designer has created in the three-dimensional environment, which tends to be the preferred environment for designing the three-dimensional physical configuration of a wiring harness. In a typical implementation, the flattening functionality is accessible (e.g., as a button or other user-selectable visual element) on a graphical user interface of the associated CAD program. Activating the flattening functionality typically causes the flattening procedure to occur automatically (i.e., without requiring further input from the user).

Once flattened, the visual layout of the resulting two-dimensional representation of the wiring harness may be edited (e.g., by adding or removing bends, modifying angles, straightening lines, adjusting fanouts, flipping route segments, etc.). Such editing may be needed and/or desired in order to present an image of the two-dimensional visual representation that fits in the space allotted and that is visually most sensible and usable. After a three-dimensional model of a wiring harness has been flattened and the resulting two-dimensional visual representation of the harness optionally edited, the designer may 1) provide a printed or digital version of the flattened two-dimensional representation of the harness to a manufacturer to manufacture a real world version of the wiring harness represented in the flattened two-dimensional representation, or 2) return to the three-dimensional environment, where the latest three-dimensional model of the wiring harness will be displayed and presented, for further potential modifications. In a typical design process, the designer may iteratively toggle back and forth between the two environments (i.e., the three-dimensional modeling environment and the two-dimensional environment) making changes to the three-dimensional model in the three-dimensional modeling environment and/or making changes to the visual layout of the flattened two-dimensional representation of the three-dimensional model in the two-dimensional environment. It is generally desirable that any changes made during such an iterative design process, particularly any changes made to the visual layout of the flattened two-dimensional representation of the wiring harness, be preserved as the designer toggles between the three-dimensional modeling environment and the two-dimensional environment making additional changes along the way. In a typical implementation, the systems and techniques disclosed herein help to preserve changes made to the visual layout of the flattened two-dimensional representation of the model even if the designer toggles back to the three-dimensional environment, makes additional changes to the three-dimensional model, and subsequently generates a new flattened version of the changed three-dimensional model. In those instances, the new flattened version of the changed three-dimensional model will reflect a preservation of prior changes made to any previous iterations of the visual layout of the two-dimensional representation of the model. In many cases, this preservation of prior changes may eliminate the need to repeatedly redo the same or similar changes in the visual layout of the two-dimensional representation of the model as the design evolves and as additional changes to the visual layout of the flattened version of the three-dimensional model evolves. This substantial preservation can, in some implementations, improve the efficiency of the overall design process and reduce the likelihood of errors in producing two-dimensional images (e.g., formboards or the like) of the wiring harness that would be of best use to a wiring harness manufacturer.

One type of design change a designer might make to a three-dimensional model during an iterative design process for a wiring harness is changing the length, by lengthening or shortening, of one or more route segments in the wiring harness. Such changes might be warranted to help the subsequently manufactured version of the wiring harness fit and/or perform well in its intended installation environment. If such changes are made to a three-dimensional model, for example, a flattened two-dimensional version of the model has reached (either by default or by manipulations entered into the computer by the designer, it may be desirable to ensure that any updates to the three-dimensional model be incorporated into and/or shown as part of the corresponding flattened two-dimensional version of the model without substantially disrupting (or disrupting at all) the prior visual layout details of the corresponding flattened two-dimensional version of the model. Various implementations of the systems and techniques disclosed herein help to address and ameliorate these concerns.

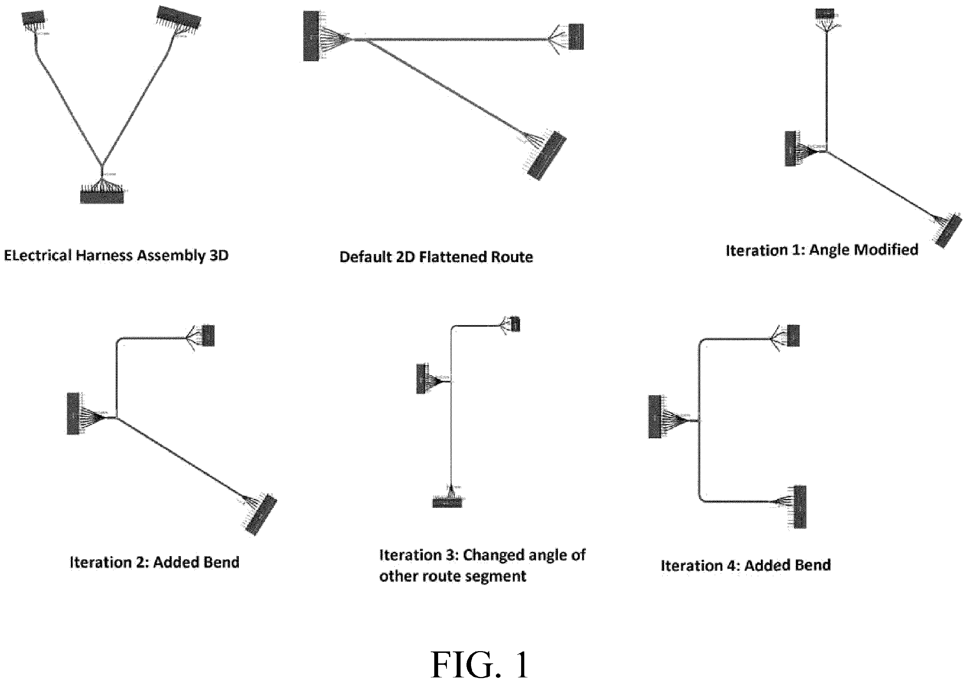

FIG. 1 shows a series of images with varying views of a relatively simple electrical wiring harness assembly design. The view in the image labeled *Electrical Harness Assembly 3D* shows an example of a three-dimensional view of a model of the wiring harness. The illustrated model has three electrical connectors that are connected together by wiring as shown. All the other views in the figure show flattened two-dimensional versions of the model. The flattened two-dimensional versions in all of these other views show the same model (i.e., the model in the *Electrical Harness Assembly 3D* image), but with different visual layouts. For example, the image labeled *Default 2D Flattened Route* shows a flattened two-dimensional version of the model having a visual layout that the computer, in this example, automatically generates in response to the designer, for the first time, activating the computer's flattening functionality, with no other instructions or specifications having been provided by the designer into the computer about the desired visual layout of the flattened two-dimensional version of the model. It can be seen that the flattened, two-dimensional version of the model in the image labeled *Default 2D Flattened Route* includes a two-dimensional representation of the same model elements, including the three connectors and the wiring interconnecting the three connectors as in the *Electrical Harness Assembly 3D* image. The visual layout of the model elements in the *Default 2D Flattened Route* image shows one connector in the upper left of the image with wiring extending from the right side of the connector, coming together in a bundle and then splitting off into two branches, with a first branch continuing to extend horizontally and to the right, and a second branch extending in a slightly downwardly angled direction from the split. Each branch terminates with its wires connecting to a corresponding one of the connectors. Both branches are substantially straight. The wiring is shown as fanning out to connect to each respective connector. The specific visual layout of model elements shown in the *Default 2D Flattened Route* image is only one example of a default visual layout. In various implementations, the first (default) flattened two dimensional version of the model generated by the computer automatically and without further designer input on the visual layout, may have a completely different visual layout than the one shown in the *Default 2D Flattened Route* image.

The rest of the images shown in the figure show a sequence of iterative changes being made to the visual layout of the flattened two-dimensional version of the model in the *Default 2D Flattened Route* image.

For example, the image labeled *Iteration 1: Angle Modified* shows the same flattened two-dimensional version of the model as shown in the *Default 2D Flattened Route* image, but with the first branch bent vertically upward (instead of being disposed horizontally as shown in the *Default 2D Flattened Route* image). In a typical implementation, the computer provides the designer access to tools or functionalities, within the virtual two-dimensional environment, to modify the angle of the first branch as shown, thereby changing the visual layout, to produce the iteration of the flattened two-dimensional version of the model shown in the *Iteration 1: Angle Modified* image.

Similarly, the image labeled *Iteration 2: Added Bend* shows the same flattened two-dimensional version of the model as shown in the *Iteration 1: Angle Modified* image, but with a bend added about midway along the first branch. In a typical implementation, the computer provides the designer access to tools or functionalities, within the virtual two-dimensional environment, to create the bend in the first branch as shown, to produce the iteration of the flattened two-dimensional version of the model shown in the *Iteration 2: Added Bend* image.

The image labeled *Iteration 3: Changed Angle of Other Route Segment* shows the same flattened two-dimensional version of the model as shown in the *Iteration 2: Added Bend* image, but with a bend added about midway along the first branch. In a typical implementation, the computer provides the designer access to tools or functionalities, within the virtual two-dimensional environment, to create this bend in the first branch as shown, to produce the iteration of the flattened two-dimensional version of the model shown in the *Iteration 3: Changed Angle of Other Route Segment* image.

Likewise, the image labeled *Iteration 4: Added Bend* shows the same flattened two-dimensional version of the model as shown in the *Iteration 3: Changed Angle of Other Route Segment* image, but with a bend added about midway along the second branch. In a typical implementation, the computer provides the designer access to tools or functionalities, within the virtual two-dimensional environment, to create this bend in the second branch as shown, to produce the iteration of the flattened two-dimensional version of the model shown in the *Iteration 4: Added Bend* image.

In a typical implementation, the computer provides the designer with access to tools or functionalities, within the virtual two-dimensional environment, that enables the designer to navigate from the two-dimensional environment, where the latest one of the illustrated iterations (1-4) would be displayed, back to the three-dimensional modeling environment, where the three-dimensional model wiring harness (*e.g.,* the one shown in the *Electrical Harness Assembly 3D* image) is shown and presented for further possible design modifications (e*.*g., adding wires, removing wires, changing wiring connectors and/or connections, changing wire lengths, etc.). In a typical implementation, the systems and techniques disclosed herein, facilitate preserving any changes made to the visual layout of the two-dimensional version of the model, e.g., the multiple iterations (1-4) that produced the visual layout shown in the *Iteration 4: Added Bend* image, while enabling the designer to make additional design changes to the model (e.g., in the three-dimensional environment) and generating a new two-dimensional version of the revised model by applying a new flattening function to the revised three-dimensional model. In a typical implementation, therefore, the resulting flattened two-dimensional version of the revised three-dimensional model will include the additional design changes (made in the three-dimensional environment), but will still appear with a visual layout that is very similar (e.g., aside from incorporating the design change, the visual layout may be identical) to the visual layout in the *Iteration 4: Added Bend* image.

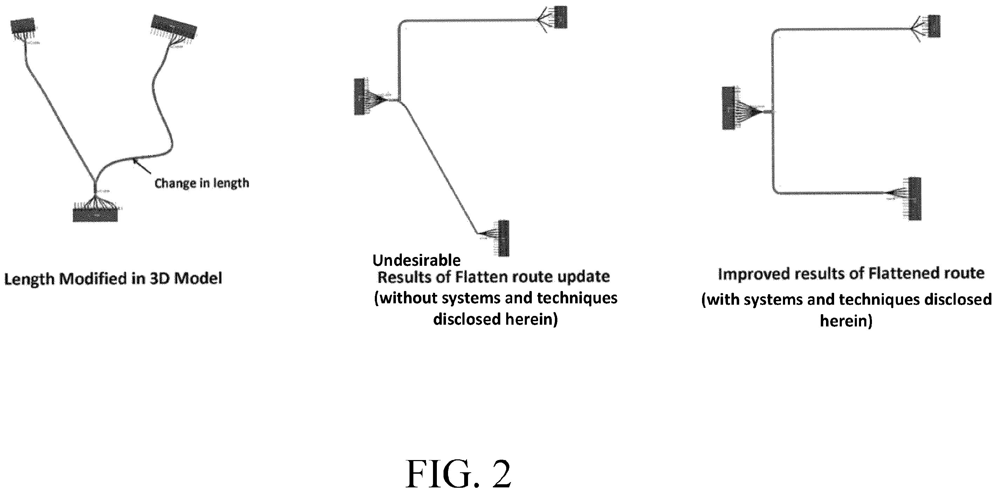

FIG. 2 shows an example of a change being made in the three-dimensional wiring harness model of FIG. 1 (after the *Iteration 4: Added Bend* step of FIG. 1) and how that change in the three-dimensional wiring harness model may affect the appearance of the corresponding two-dimensional version of the model when the changed version of the three-dimensional wiring harness model is once again flattened. Specifically, the figure shows the possible outcomes if the computer uses the systems and techniques disclosed herein (*Improved Results of Flattened Route*) and if the computer does not use the systems and techniques disclosed herein (*Undesirable Results of Flatten Route Update*)*.* Comparing the two possible outcomes (in FIG. 2) to the *Iteration 4: Added Bend* image in FIG. 1 shows that the *Improved Results of Flattened Route* image (in FIG. 2) is significantly more similar in visual layout to the *Iteration 4: Added Bend* image in FIG. 1 than the *Undesirable Results of Flatten Route Update* (also in FIG. 2). It is clear that, if the computer produces the *Undesirable Results of Flatten Route Update* image, the designer will more likely than not decide to take additional steps to edit its visual layout to make its visual layout more similar to its prior layout (in the *Iteration 4: Added Bend* image of FIG. 1). These additional steps may be avoided by the computer implementing the modified approach disclosed herein that produces the visual layout shown in the *Improved Results of Flattened Route* image. That image, aside from showing the change in length (made in the *Length Modified in 3D Model* image), has a visual layout that is virtually identical to the visual layout of the *Iteration 4: Added Bend* image.

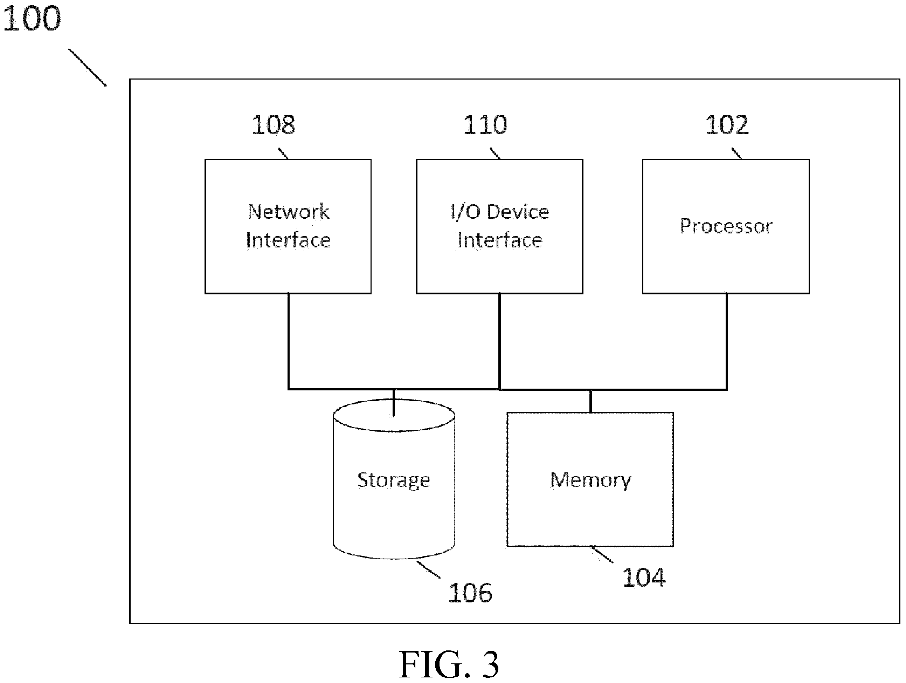

FIG. 3 is a schematic representation of an exemplary computer 100 configured to implement the systems and functionalities disclosed herein. More specifically, in a typical implementation, computer 100 is configured to facilitate the flattening of a three-dimensional model (e.g., of a wiring harness) to generate a flattened two-dimensional version of the three-dimensional model in a virtual environment. Moreover, the computer 100 is configured to perform iterative flattening processes, with optional design changes made to the model between sequential flattening processes, with each iterative flattening process largely (or completely) preserving visual layout details from prior iterations that are applicable to the flattened two-dimensional version of the model.

The computer 100 has a processor 102, computer-based memory 104, computer-based storage 106, a network interface 108, an input/output device interface 110, and a bus that serves as an interconnect between the components of the computer 100. The bus acts as a communication medium over which the various components of the computer 100 can communicate and interact with one another.

The processor 102 is configured to perform the various computer-based functionalities disclosed herein as well as other supporting functionalities not explicitly disclosed herein. Typically, the processor 102 performs these, and other, functionalities by executing computer-readable instructions stored on a computer-readable medium (e.g., in 104 or 106). In various implementations, some of these functionalities may be performed with reference to data stored in the computer-readable medium and/or received from some external source (e.g., an input / output (I/O) device via the I/O device interface 110 and/or from an external network via the network interface 108).

The computer 100 has volatile and non-volatile memory. In a typical implementation, memory 104 provides a form of volatile storage storing computer-readable instructions that, when executed by the processor 102, cause the processor 102 to perform or facilitate some (or all) of the computer-based functionalities disclosed herein. Moreover, in a typical implementation, storage 106 provides a form of non-volatile memory storing computer-readable instructions, such as instructions to implement an operating system, configuration information, etc. The various system memory resources (e.g., 104, 106) may store data, as well.

In a typical implementation, the memory 104 stores computer-readable instructions that, when executed by the processor 102, cause the processor 102 to execute functionalities disclosed herein as being attributable to the computer (or computer system). In some implementations, these instructions are for a computer-aided design program adapted to include the functionalities disclosed herein incorporated therein. An example of a computer-aided design program suitable for adapting to incorporate the functionalities disclosed herein in this regard is the SolidWorks^{®} computer program, available from Dassault Systèmes SolidWorks Corporation, the applicant of the current application. The computer-aided design program, so adapted, would include design flattening functionalities disclosed herein that efficiently flatten or convert 3D electrical harness assembly designs into clean, readable, and incredibly useful 2D versions of the electrical harness assembly designs and preserve prior layout details in the 2D versions thereof.

The network interface 108 is a component that enables the computer 100 to connect to any one or more of a variety of external computer-based communications networks, including, for example, local area networks (LANs), wide area networks (WANs), such as the Internet, or the like. In various implementations, the network interface 108 can be implemented in hardware, software, or a combination of hardware and software.

The input/output (I/O) device interface 110 is a component that enables the computer 100 to interface with any one or more input or output devices, such as a keyboard, mouse, display, microphone, speakers, printers, etc. In various implementations, the I/O device interface can be implemented in hardware, software, or a combination of hardware and software. In a typical implementation, the computer may include one or more I/O devices (*e.g.,* a computer screen, keyboard, mouse, printer, touch screen device, etc.) connected to the I/O device interface 110. These I/O devices (not shown in FIG. 3) function as human-machine-interfaces (HMIs) and are generally configured to enable a human user to interact with the system 100 to access and utilize functionalities, particularly those related to computer-aided design, and flattening an electrical harness assembly design, as disclosed herein.

In an exemplary implementation, the computer 100 is connected to a display device (e.g., via the I/O device interface 110) and configured to present at the display device a visual representation of an interface to a product design environment, such as the one provided by and within the SolidWorks^{®} computer program, adapted to include the functionalities disclosed herein. The interface and its visual representation on the computer-based display device, in a typical implementation, provides the user with access to the flattening functionalities disclosed herein, and displays (e.g., on a display device coupled to the I/O device interface 110) a visual representation of a 3D model of the electrical wiring harness assembly design before flattening and a flattened 2D version of the electrical harness assembly model after flattening, as well as other information that may be included in a formboard type of drawing of an electrical harness.

In some implementations, the computer 100 and its various components may be contained in a single housing (e.g., as in a personal laptop) or at a single workstation. In some implementations, the computer 100 and its various components may be distributed across multiple housings, perhaps in multiple locations on a network. Each component of the computer 100 may include multiple versions of that component, possibly working in concert, and those multiple versions may be in different physical locations and connected via a network. For example, the processor 102 in FIG. 3 may represent multiple discrete processors in different physical locations working together to perform processes attributable to the processor 102 in a coordinated manner. A wide variety of possibilities regarding specific physical implementations are possible.

In various implementations, the computer 100 may have additional elements not shown in FIG. 3. These can include, for example, controllers, buffers (caches), drivers, repeaters, receivers, etc. Furthermore, the interfaces (e.g., 108, 110) may include elements not specifically represented in FIG. 3, including, for example, address, control, and/or data connections to facilitate communications between the illustrated computer components.

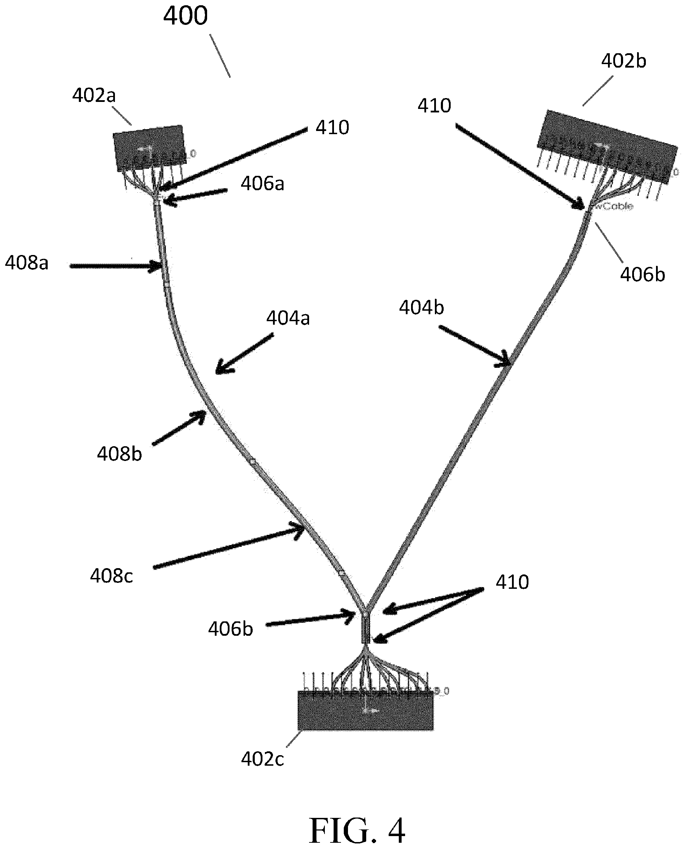

FIG. 4 is a visual representation of the three-dimensional wiring harness model (numbered 400 in FIG. 4) from the *Electrical Harness Assembly 3D* image in FIG. 1. In an exemplary implementation, the computer 100 enables a designer to create and/or modify/edit the three-dimensional wiring harness model. Moreover, the computer 100 is configured to store the three-dimensional wiring harness model 400 in memory (e.g., 104) and display the visual representation of the three-dimensional wiring harness model 400 to a designer for review/modification/editing.

The illustrated visual representation shows that the model 400 has three electrical connectors 402a, 402b, and 402c that are connected together by wiring as shown. The wiring includes a first route segment 404a that extends between a start point 406a (near connector 402a) and an end point 406c (near connector 402c), and a second route segment 404b that extends between a start point 406b (near connector 402b) and end point 406c (near connector 402c). The first route segment 404a in the image is represented by three sketch segments - a first sketch segment 408a, a second sketch segment 408b, and a third sketch segment 408c. The illustrated wiring harness 400 includes a plurality of junction points 410 as well.

The computer 100, in a typical implementation, stores the three-dimensional model 400 in memory 104 with route-specific data structures for the model 400. The route-specific data structures may have the following configuration:

| *RouteSegmentData3D_c* |
|---|
| m_RouteSegmentID |
| m_RouteSegmentLength3D |
| m_StartPoint3DIndex |
| m_EndPoint3DIndex |
| m_ListofSketchSegments3D |

This data structure includes data that would be specific to one particular route segment, of potentially several, in a corresponding model. Typically, a model may be represented overall by a collection of data that includes multiple such data structures, with one data structure per route segment in the model. Model 400, for example, includes two route segments 404a, and 404b. Model 400, therefore, may be represented in computer memory by a collection of data that includes two such data structures, one for route segment 404a, and one for route segment 404b. More complex models may, of course, have more of such data structures.

In the above data structure, *RouteSegmentData3D_c* is the name of the data structure class and logically corresponds to (and holds information on) a particular one of the route segments in the associated model (e.g., model 400). In an exemplary implementation, the *RouteSegmentData2D_c* may be stored as a member variable. In the context of model 400, *RouteSegmentData3D_c* may logically correspond to route segment 404a. In that case, the computer 100 may include a second data structure with a different *RouteSegmentData3D_c* name that corresponds to route segment 404b. The other data entries in the illustrated data structure represent various details (e.g., in the form of member variables) associated with the corresponding route segment. For example, in the illustrated example, *m_RouteSegmentID* is a member variable that represents an identifier (ID) of the associated route segment, *m_RouteSegmentLength3D* is a member variable that includes a numerical value representing a length of the associated route segment in the three-dimensional modeling environment, *m_StartPoint3DIndex* is a member variable that holds an index or position for a start point of the associated route segment in the three-dimensional modeling environment, *m_EndPoint3DIndex* is a member variable that holds an index or position for an end point of the associated route segment in the three-dimensional modeling environment, and *m _ListofSketchSegments3D* is a member variable that holds one or more member variables that represent a list of three-dimensional sketch segments, each of which forms a portion of the associated route segment. As an example, the list of three-dimensional sketch segments in *m _ListofSketchSegments3D* for model 400 would include sketch segment 408a, sketch segment 408b, and sketch segment 408c. Of course, in various implementations, other data associated with model 400 may be stored in memory 104, as well.

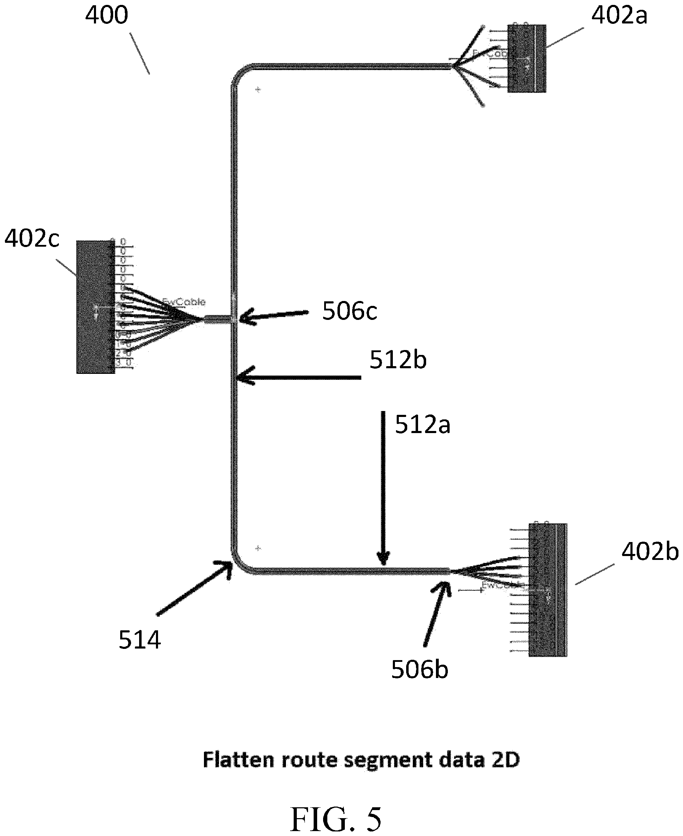

FIG. 5 is a visual representation of the flattened two-dimensional version of the wiring harness model 400 from the *Iteration 4: Added Bend* image in FIG. 1. In an exemplary implementation, the computer 100 is configured to store data representative of the flattened two-dimensional version of the wiring harness model 400 in memory (e.g., 104) and to display the visual representation of the two-dimensional wiring harness model 500 to a designer for review/modification/editing.

The illustrated visual representation shows that the model 400 has three electrical connectors 402a, 402b, and 402c that are connected together by wiring as shown. The wiring represents the first route segment that extends between a first point (near connector 402a) and a second point (near connector 402c), and a second route segment that extends between a first point (near connector 402b) and second point (near connector 402c). The visual representation of the model includes, for example, a first line sketch segment 512a, an arc sketch segment 514, and a second line sketch segment 512b. The first line sketch segment 512a, the arc sketch segment 514, and the second line sketch segment 512b, in the illustrated visual representation, extend between a start point 506b (near connector 402b) and an end point 506c (near connector 402c).

The computer 100, in a typical implementation, stores the data associated with the two-dimensional version of the model 400 in memory 104 with route-specific data structures for the two-dimensional version of the model including, typically, data associated with the particular visual layout. The route-specific data structures may have the following configuration:

| *RouteSegmentData2D_c* |
|---|
| m _RouteSegmentID |
| m_RouteSegmentLength2D |
| m_StartPoint2DIndex |
| m_EndPoint2DIndex |
| m_StartPointIndex3D |
| m_EndPointIndex3D |
| m_ListofSketchSegments2D |

This data structure includes data that would be specific to one particular route segment, of potentially several, in a corresponding two-dimensional representation of a model. In a typical implementation, the data structure is created when a corresponding three-dimensional model is flattened to create the associated two-dimensional version of the model. Typically, a model may be represented overall by a collection of data that includes multiple such data structures, with one data structure per route segment in the model.

In the above data structure, *RouteSegmentData2D* c is the name of the data structure class and logically corresponds to (and holds information on) a particular one of the route segments in the associated two-dimensional representation of (e.g., model 400). In an exemplary implementation, the *RouteSegmentData2D* c may be stored as a member variable. In the context of model 400, *RouteSegmentData2D* c may logically correspond to the portions of the two-dimensional version of the model that correspond to, overlap with, or include route segment 404a. In that case, the computer 100 may include a second data structure with a different *RouteSegmentData2D* c name that corresponds to the route segment 404b portion of the model. In an exemplary implementation, each *RouteSegmentData2D* c data structure has a corresponding *RouteSegmentData3D* c data structure, and vice versa.

The other data entries in the illustrated data structure represent various details (fe.g., in the form of member variables) associated with the corresponding portion of the two-dimensional version of the model. For example, as above, in the illustrated example, *m_RouteSegmentID* is a member variable that represents an identifier (ID) of the associated route segment. In a typical implementation, *m_RouteSegmentID* in *RouteSegmentData2D* c has the same value as *m - RouteSegmentID* in the corresponding *RouteSegmentData2D c.* Meanwhile, *m_RouteSegmentLength2D* is a member variable that includes a numerical value representing a length of the portion of the two-dimensional version of the model that is associated with the route segment, *m_StartPoint2DIndex* is a member variable that holds an index or position for a start point of the associated route segment in the two-dimensional virtual environment, and *m_EndPoint2DIndex* is a member variable that holds an index or position for an end point of the associated route segment in the two-dimensional virtual environment. As above, *m_StartPoint3DIndex* is a member variable that holds an index or position for a start point of the associated route segment in the associated three-dimensional model, and *m_EndPoint3DIndex* is a member variable that holds an index or position for an end point of the associated route segment in the associated three-dimensional model. Finally, *m_ListofSketchSegments2D* is a member variable that holds one or more member variables that represent a list of two-dimensional sketch segments, each of which forms a portion of the image that is associated with the corresponding route segment. As an example, the list of two-dimensional sketch segments in *m- ListofSketchSegments2D* for one portion of the flattened two-dimensional version of model 400 in FIG. 5 may include first line sketch segment 512a, the arc sketch segment 514, and the second line sketch segment 512b. Of course, in various implementations, other data associated with the flattened two-dimensional version of model 400 may be stored in memory 104 (and, optionally, as part of *RouteSegmentData2D* c, as well. Such other data may include, for example, a start point or start point index for a two-dimensional location of a start point for each associated sketch segment, and an end point or end point index for a two-dimensional location of an end point for each associated sketch segment.

In an exemplary implementation, the computer 100 may generate the flattened two-dimensional version of the model in response to a designer selecting a "Flatten Route" command that the computer 100 makes accessible on a graphical user interface presented to the designer. As part of the flattening process that follows, the computer 100 updates the foregoing data structures, as needed, to ensure that data stays up-to-date. However, in an exemplary implementation, prior to updating the data structure(s) for the flattened two-dimensional version of the model, the computer compares the latest version of the data structure of the 3D model (which would have been updated to reflect any changes made in the last session in the 3D modeling environment (e.g., changes to route segment length)) and the current data structure of the flattened 2D version of the model, which would represent and correspond to the prior iteration of the model (prior to any changes that were made in the last session in the 3D modeling environment). Typically, these data structures are accessed when the computer is generating an updated version of the flattened, two-dimensional version of the model. More specifically, these data structures are used as preprocessing inputs in the update flatten route process (performed by computer 100) to identify changed route segments based on length modifications in 3D Route and to accommodate those changes accordingly in the 2D version.

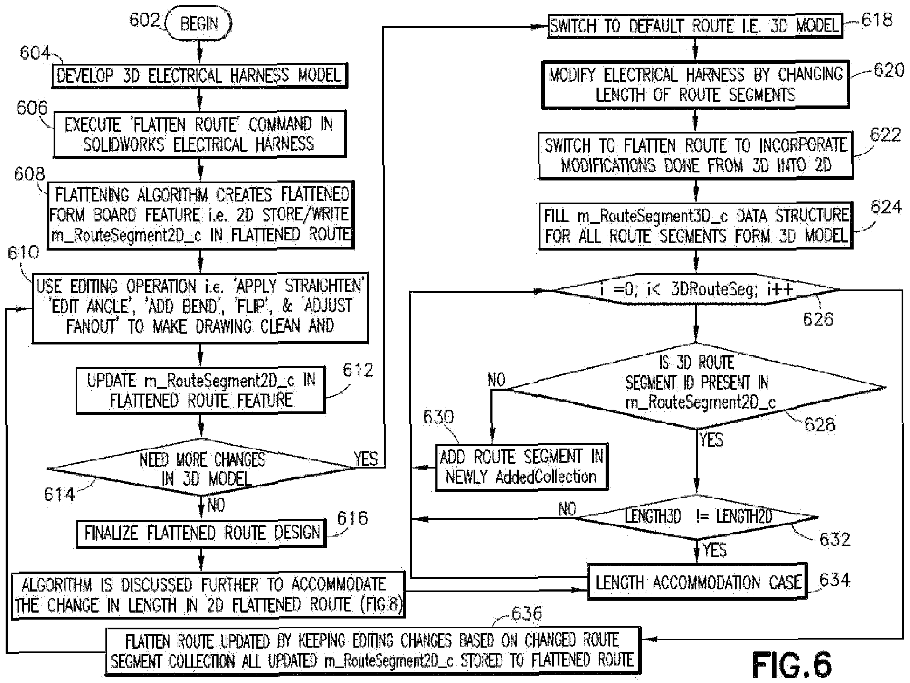

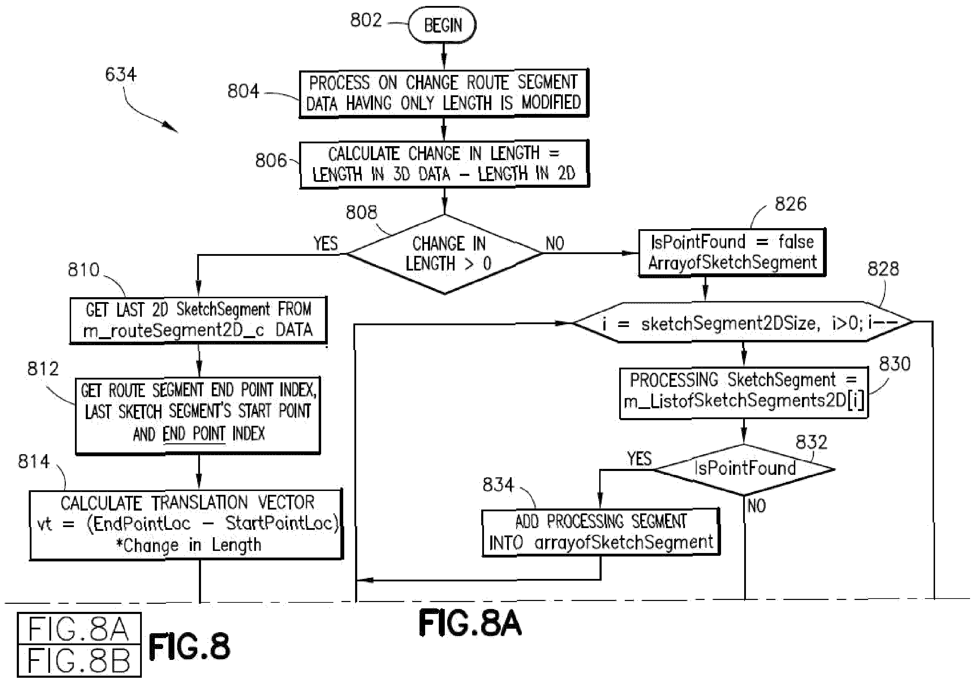

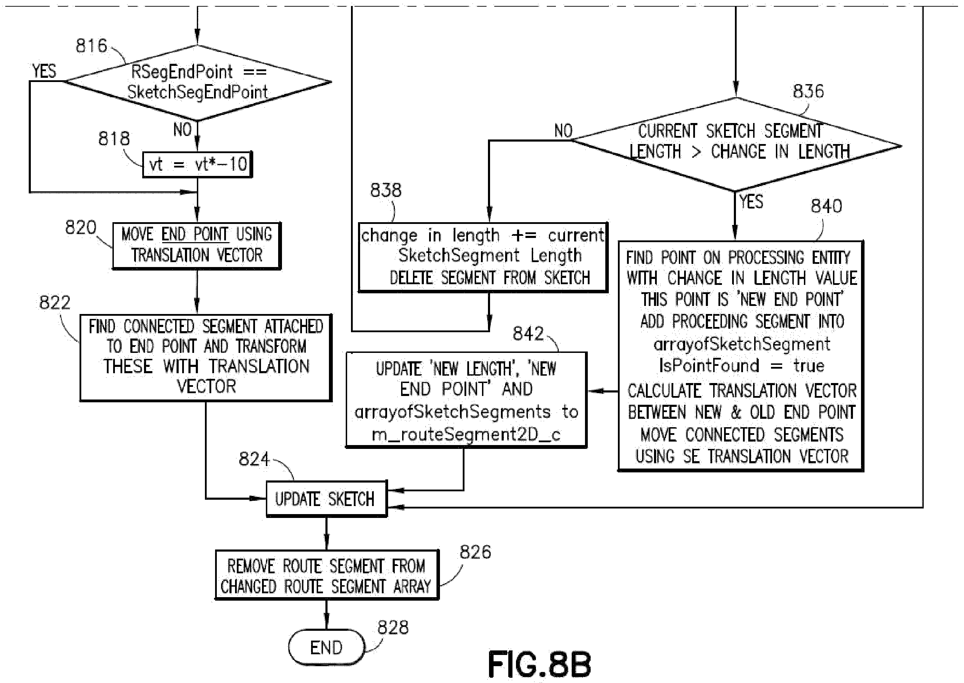

FIGS. 6 and 8 are flowcharts showing an implementation of a computer-implemented process that facilitates creating a virtual three-dimensional model (e.g., of a wiring harness), flattening the three-dimensional model to generate a flattened two-dimensional version of the model, editing a visual layout of the flattened two-dimensional version of the model to produce an edited version of the flattened two-dimensional version of the model, subsequently modifying the three-dimensional model (e.g., to lengthen or short a route segment in the modeled wiring harness) to produce a modified version of the three-dimensional model, and generating a subsequent flattened two-dimensional version of the model that incorporates the modifications introduced into the modified version of the three-dimensional model while preserving the visual layouts introduced into the prior edited version of the flattened two-dimensional version of the model.

In an exemplary implementation, the process of converting a three-dimensional model into a flattened two-dimensional version of the model may be executed in response to a user-initiated command. In an adapted version of SOLIDWORKS^{®} CAD software, with the aforementioned Routing^{™} add-in, the computer 100 may executing in response to a user initiating a switch configuration (or "Flatten Route") command, which may be available to the user by right clicking into a context menu in SOLIDWORKS^{®} CAD Software with the Routing^{™} add-in and selecting the switch configuration command. In such an implementation, when the user makes the indicated selection, the computer 100 may read (e.g., from one or more 3D route property data structures in memory, such as *RouteSegmentData3D* c) information regarding and describing every route segment that is present in the associated three-dimensional electrical harness model. This information may consist, for example, of a route segment ID (e.g., *m _RouteSegmentID*), a route segment length (e.g., m _RouteSegmentLength3D), start and end point IDs (e.g., *m_StartPoint3DIndex* and *m_EndPoint3DIndex*) and/or a collection of associated 3D sketch segments (e.g., *m ListojSketchSegments3D).* This data may be stored in and read from the data structure of *m _RouteSegment3Dc.*

If a prior flattened, two-dimensional version of the model has been created and/or edited, the computer 100 (in response to the user making the indicated selection) may also read (e.g., from one or more 2D route property data structures in memory, such as *RouteSegmentData2D c)* information regarding and describing every route segment that is present in the flattened two-dimensional version of the model. This information may include, for example, information about the prior flattened two-dimensional version of the model, such as route length information (e.g., *m _RouteSegmentLength2D),* two dimensional route start point and end point information (e.g., *m _StartPoint2DIndex, m _EndPoint2DIndex*)*,* information regarding an associated three dimensional route start point and end point (e.g., *m _StartPoint3DIndex, m_EndPoint3DIndex*) and a collection of associated 2D sketch segments (e.g., *m ListofSketchSegments2D).* This data may be stored in and read from the data structure of *m _RouteSegment2Dc.*

At a high level, and continuing with this example, after the user makes the indicated selection and the computer 100 reads (accesses) the aforementioned data / data structures, the computer-implemented process may find route segments that have been modified in the three-dimensional modeling environment (e.g., a change in route segment length). In an exemplary implementation, this may involve the computer 100 comparing data structure *m_RouteSegment3D_c* with data structure *m _RouteSegment2D_c* and based on that comparison, update one or more portions of *m _RouteSegment2D_c*, while preserving the rest of *m _RouteSegment2Dc.*

In an exemplary implementation, for non-modified route segments, the computer 100, in executing the aforementioned comparison, may determine that all the route segments present *m _RouteSegment3D*c have the same information as the *m_RouteSegment2D_c* data structure. Specifically, the computer 100 may determine that the data structure comparison reveals that the associated length, 3D Start Point ID, and 3D end point ID in both data structures are the same. In that case, the computer 100 may simply reproduce those non-modified route segments based on the existing data in the *m _RouteSegment2D_c* data structure.

In an exemplary implementation, for a newly added route segment (e.g., a route segment that has been added into the three-dimensional model but that was not present in the immediately prior iteration of the flattened, two-dimensional version of the model), the computer 100 may determine that one of the route segments read from *m_RouteSegment3D_c* is not represented in the corresponding *m _RouteSegment2D_c* data structure. In that case, the computer 100 may take steps to incorporate the identified newly added route segment to the new iteration of the flattened two-dimensional version of the model being generated. Additionally, in a typical implementation, the computer 100 may add new data about the newly added route segment to a corresponding data structure (e.g., *m RouteSegment2D_c*) for a new iteration of the flattened two-dimensional version of the model. In a typical implementation, the computer 100 may leave intact the rest of the corresponding *m _RouteSegment2D_*c data structure and use that, along with the newly added segment information, to generate the new iteration of the flattened two-dimensional version of the model.

In an exemplary implementation, for a newly deleted route segment (e.g., a route segment that has been deleted from the three-dimensional model but that was present in the immediately prior iteration of the flattened two-dimensional version of the model), the computer 100 may determine that one or more route segments read from *m _RouteSegment2D*c are not represented in the corresponding *m _RouteSegment3D_*c data structure. In that case, the computer 100 may exclude the newly deleted route segment from the process of generating the new iteration of the flattened two-dimensional version of the model. In a typical implementation, the computer 100 may leave intact the rest of the corresponding *m _RouteSegment2D_*c data structure and use that to generate the new iteration of the flattened two-dimensional version of the model.

In an exemplary implementation, for a changed route segment (e.g., an already existing route segment in a model whose length, for example, has been modified relative to a prior iteration of the model), the computer 100 may determine that corresponding route segment information read from *m _RouteSegment3D_*c has the same route segment ID with same 3D start and end point IDs but a different length (i.e. *m routeSegmentLength)* as compared with *m _RouteSegment2D*c represents a change in geometry in 3D for length.

Referring now to FIG. 6, the process represented in the illustrated flowchart begins at 602 and includes developing a three-dimensional model of a wiring harness (at 604). The SOLIDWORKS^{®} Electrical 3D computer program, for example, enables designers to design wiring diagrams and routes, creating three-dimensional paths for wires, cables, harnesses, etc., placing connectors, clips, etc., computing lengths of actual routing paths, etc. In a typical implementation, a designer would interact with a computer program such as the aforementioned SOLIDWORKS^{®} Electrical 3D computer program to develop the three-dimensional model of the wiring harness.

Next (at 606), the process represented by the illustrated flowchart includes executing a "flatten route" command. In a typical implementation, the software program used to develop / create the three-dimensional model of the wiring harness would display to the designer a graphical user interface (GUI) that includes a user interface (UI) element that is selectable to initiate a computer-implemented flattening process to be applied to the virtual three-dimensional wiring harness model. In an exemplary implementation, the designer (at 606) may select the "flatten route" command to initiate the process, in response to which the computer 100 may automatically apply the flattening process (algorithm) to the three-dimensional model.

The flattening algorithm (at 608) produces a flattened two-dimensional version of the three-dimensional model. At this point, the computer 100 creates *m _RouteSegmentData2D_c* (also referred to herein as *RouteSegmentData2D*_*c*) data structure(s) for the flattened two-dimensional version of the three-dimensional model and based on the corresponding three-dimensional model. The flattening algorithm in the illustrated flowchart produces a flattened formboard feature (that includes the flattened two-dimensional version of the model).

According to the illustrated flowchart, the process (at 610) includes an editing process to make a drawing that includes the flattened two-dimensional version of the model cleaner, more user friendly, etc., or to change it in any desired or chosen manner. Specifically, the edits made here (at 610) modify the visual layout of the flattened two-dimensional version of the model. The specific edits can vary depending on the preferences or the designer and/or manufacturer and/or the intended use of the flattened two-dimensional version of the model. The edits may be made by the designer selecting one or more UI elements and interacting with associated computer-implemented functionalities that the computer software program provides to the designer (typically, on the GUI). The functionalities and associated commands may include, for example, one or more of "apply straighten," "edit angle," "add bend," "flip," "adjust fanout," etc. In a typical implementation, "apply straighten" refers to a computer command or function that straightens the path of a wire or cable segment (e.g., between two points). In a typical implementation, "edit angle" refers to a computer command or function that enables a designer to manually adjust the angle or bend at specific points along a wiring harness. In a typical implementation, "add bend" refers to a computer command or function that enables a designer to manually insert a bend into the wiring harness. In a typical implementation, "flip" refers to a computer command or function that enables a designer to change the orientation or direction of a connector, harness branch or route, for example. In a typical implementation, "adjust fanout" refers to a computer command or function that enables a designer to modify how individual wires exit or spread out from a common point, such as the end of a bundled harness. In various implementations, other editing commands and functionalities may be available for access and utilized by the designer (at 608) to edit the visual layout. In some instances, the extent of edits made at this step may be extensive. Whether extensive or not, it is generally desirable that the edits be preserved (absent deliberate subsequent changes to the edits by the designer), to a great extent at least, even if one or more design details (e.g., length of routes) in the associated three-dimensional model change at subsequent points in the design process.

FIG. 1 shows an example of a three-dimensional model (labeled *Electrical Harness Assembly 3D*), a default computer-generated flattened two-dimensional version of the model (labeled *Default 2D Flattened Route*)*,* and a sequence of iterations showing exemplary edits that a user may make to the visual layout of the flattened two-dimensional version of the model. As mentioned above, these edits include a first iteration (labeled *Iteration 1: Angle Modified*) where the user has modified the angle between two branches in the illustrated wiring harness, a second iteration (labeled *Iteration 2: Added Bend*) where the user has added a bend to a first one of the branches in the illustrated wiring harness, a third iteration (labeled *Iteration 3: Changed Angle of other route segment*) where the user has again modified the angle between the two branches, and a fourth iteration (labeled *Iteration 4: Added Bend*) where the user has added a bend to a second one of the branches in the illustrated wiring harness. These are mere examples of the types of changes that a user may make to the visual layout of a flattened, two-dimensional version of a model during editing process (at 610). If the designer, after making this sequence of edits, wants to then change the length of one of the route segments in the electrical harness model (e.g., in the 3D modeling environment) (e.g., because of design requirements), it is desirable that (and the computer 100 helps ensure that) the a subsequently generated flattened, two-dimensional version of the model keeps the edits (i.e. results after iteration 4) as much as possible, while updating it to include the change in length.

Referring again to FIG. 6, (at 612), the process represented by the illustrated flowchart includes updating the *m _RouteSegmentData2D_c* data structure(s) for the flattened two-dimensional version of the model. If, for example, the edits (made at 610) changed the position, in two-dimensional space, of a start point of a particular route segment in the flattened two-dimensional version of the model, the computer (at 612) updates the corresponding *m_StartPoint2DIndex* in the *m_RouteSegmentData2D_c* data structure for that route segment. Likewise, if the edits (made at 610) changed the position, in two-dimensional space, of an end point of a particular route segment in the flattened two-dimensional version of the model, the computer (at 612) updates the corresponding *m_EndPoint2DIndex* in the *m_RouteSegmentData2D_c* data structure for that route segment. This step 612 is represented in the illustrated flowchart as coming after step 610. This may be correct. However, in some implementations, the computer 100 may implement step 612 automatically for each edit or set of edits as the designer makes those edits. In a typical implementation, however, the computer 100 updates *m _RouteSegmentData2D_c* as needed in view of the edits made before proceeding to any steps following step 612.

If (at 614), the three-dimensional model is complete (e.g., no more changes are needed to be made in the three-dimensional model) and the edits to the visual layout of the two-dimensional version of the model (made at 610) are finished, then the flattened route design (with the flattened two-dimensional version of the model) is (at 616) considered to be complete. In an exemplary implementation, the computer 100, in response to a designer instruction, may set a designation in computer memory associated with the three-dimensional model and/or the associated flattened two-dimensional version of the model indicating completion (i.e., that the design is no longer a work-in-progress).

Once the model and/or its flattened route design are designated as complete (at 616), one or more drawings (including, for example, formboard-style drawings) based on the model and including the two-dimensional version of the model may be provided to a manufacturer (e.g., by some form of electronic transmittal, by printing and physical delivery, or otherwise). The manufacturer typically utilize the drawings provided to manufacture one or more real world versions of the associated wiring harness based on the wiring harness design represented in the drawings provided. The wiring harness may be installed in an end product (e.g., automobile, etc.) to interconnect real world electrical and/or electronic components so as to carry electrical control, data, and/or power signals between those components.

If (at 614), the three-dimensional model is not complete (e.g., the designer decides to make more changes to the model), then the designer interacts with the computer 100 to cause the computer 100 to switch back to three-dimensional modeling environment (at 618). In a typical implementation, the designer is able to navigate between the two-dimensional environment and the three-dimensional modeling environment by selecting a UI element presented on a GUI by the computer 100. In response to returning to the three-dimensional modeling environment, the computer 100 typically ceases to display the flattened two-dimensional version of the model but instead displays the three-dimensional model itself in the three-dimensional modeling environment.

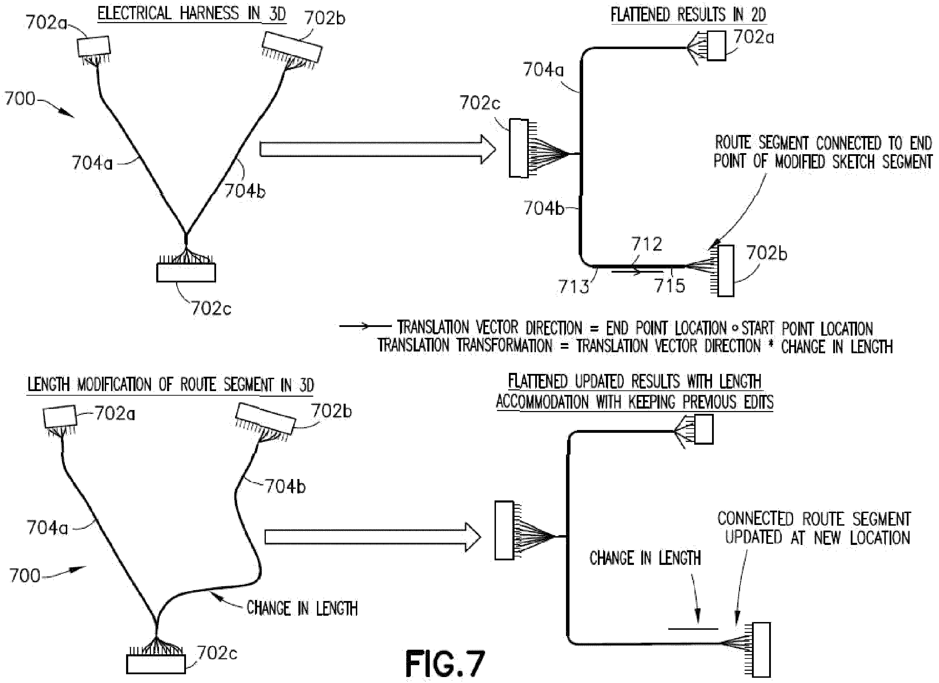

The three-dimensional modeling environment enables the designer to make further design changes to the model, which is part of the process represented in the illustrated flowchart. Specifically, according to the process represented by the flowchart, the designer (at 620) modifies the wiring harness model by changing the length of one or more route segments in the wiring harness model. FIG. 7 shows an example of this kind of change.

Specifically, FIG. 7 shows an initial image of a three-dimensional model 700 in a three-dimensional modeling environment (labeled *Electrical Harness in 3D*)*,* a flattened two-dimensional version of the three-dimensional model (labeled *Flattened Results in 2D*)*,* a subsequent image of the three-dimensional model 700 in the three-dimensional modeling environment and with one elongated route segment (labeled *Length modification of route segment in 3D*)*,* and a subsequent flattened two-dimensional version of the three-dimensional model with the elongated route segment (labeled *Flattened updated results with length accommodation with keeping previous edits*)*.* This is an example of a sequence of images that the computer may present to a designer onscreen and in the order just described as the model evolves (when the designer increases the length of one of its route segments). Of note is the fact that although the model is changed in the three-dimensional modeling environment (by elongating one of the model's route segments), integrating those changes into a flattened two-dimensional version of the model do not significantly disrupt the visual layout of the flattened two-dimensional version of the model.

Specifically, in FIG. 7, it can be seen that, aside from the elongated route segment being shown as elongated, the flattened two-dimensional version of the model in the *Flattened updated results with length accommodation with keeping previous edits* image shares the same visual layout characteristics as the flattened two-dimensional version of the model in the previous (i.e., before length modification in 3D) *Flattened Results in 2D* image. For example, in both images, the connectors are configured along lines that are parallel to one another, the central connector 702c is positioned on one side of the image with the other two connectors 702a, 702b positioned on the other side of the image, the major portions of the route segments follow straight lines (either up and down or right to left), with rounded 90 degree bends, the fan out to connector 702c extend to the left to the connection points on connector 702c, and the fan outs to each of the other connectors 702a, 702b extend to the right to the connection points on the corresponding connector 702a or 702b. Notably, these visual layout characteristics affect how the model appears (e.g., on screen) on a single two dimensional plane, but does not affect the design details of the model itself. Other visual layout characteristics may contribute to a desired appearance (e.g., neat, orderly, and intuitive / easy-to-understand) of the flattened two-dimensional version of the model. In shifting from the *Flattened Results in 2D* image to the *Flattened updated results with length accommodation with keeping previous edits* image, the computer 100 incorporates the latest change to model (i.e., a lengthening of one of its route segments), but maintains the visual layout characteristics from the prior *Electrical Flatten Route Before Split route update* image, despite the incorporated design change. In this manner, the visual layout characteristics are preserved from one iteration of the flattened two-dimensional version of the model to the next, despite design changes having been made during an interim three-dimensional modeling session. In a typical implementation, the computer 100 is configured to store information detailing the visual layout characteristics of the flattened two-dimensional version of a model. The design changes made in the virtual three-dimensional modeling environment (lengthening route segment 704b) results in a change the visual layout of the three-dimensional model being displayed by the computer 100 and typically causes the computer 100 to update *m _RouteSegmentData3D_c* for any affected route segments. Specifically, *m_RouteSegmentLength3D* in *m_RouteSegmentData3D_c* is updated to reflect the increased length of route segment 702b. In the illustrated implementation, the connector positions (and, therefore, associated start and end points of any connecting route segments, including route segment 702b) remain the same, despite the change in length applied to route segment 702b. Therefore, although *m_RouteSegmentLength3D* in *m_RouteSegmentData3D_c* is updated to reflect the increased length of route segment 702b, in this example at least, neither *m_StartPoint3DIndex* nor *m_EndPoint3DIndex* would be modified in any way.

Referring again to FIG. 6, next, the designer causes the computer 100 (at 622) to switch from the three-dimensional modeling environment back to the two-dimensional flatten route environment. In a typical implementation, the designer may accomplish this by activating the *flatten route* functionality (e.g., by selecting an onscreen UI element to trigger the functionality). The computer 100, in response to the *flatten route* functionality being activated, incorporates the design modifications made in the three-dimensional modeling environment into the two-dimensional version of the model that the computer 100 displays in the two-dimensional environment. As a result, the computer 100 displays an updated two-dimensional version of the three-dimensional model, where the updated two-dimensional version of the three-dimensional model is aligned with the latest version of the three-dimensional model and includes all the applicable latest design changes.

At 624, the process represented in the flowchart includes the computer 100 filling in (or updating) *m_RouteSegmentData3D_c* in memory (e.g., 104) for all route segments that form the three-dimensional model. In some implementations, prior to 624, *m_RouteSegmentData3D_c* already will be populated with data from previous iterations of the model. In that case, the filling of *m_RouteSegmentData3D_c* may simply include overwriting only those data entries that relate to the latest set of design changes. For example, where only one route segment from the model has been lengthened, the computer 100 (at 624) may update only those data entries in *m_RouteSegmentData3D_c* that change as a result of the route segment lengthening. Specifically, in this regard, the computer 100 may update the *m_RouteSegmentLength3D* portion of the *RouteSegmentData3D_c* to reflect the lengthening of that route segment. Since the three-dimensional locations and orientations of the connector at either end of the modified route segment remain unchanged in the three-dimensional model, *m_StartPoint3DIndex* (near one connector) and *m_EndPoint3DIndex* (near the other connector) may remain unchanged (at 624).

At 626, the computer 100 enters a functional loop that iterates over the number of three-dimensional route segments (e.g., *RouteSegmentData3D_c*) that make up the wiring harness in the three-dimensional wiring harness model. The loop, as indicated at 626 is initialized with i, a variable stored in memory, having an initial value of zero (i = 0). The value assigned to i is increased by one (i++) after each loop. The loop is iterated for as long as the value of i is less than the number of total three dimensional route segments (e.g., i *< 3DRouteSeg,* where *3DRouteSeg* is a count of route segments in the model) in the three-dimensional wiring harness model. The loop is executed once per route segment. So, in a typical implementation, with this functional loop (that the computer 100 enters at 626), the computer 100 processes each three-dimensional route segment one at a time.

More specifically, according to the illustrated functional loop, for each three-dimensional route segment, the computer 100 (at 628) evaluates whether the 3D route segment ID *m_RouteSegmentID* from the *m _RouteSegmentData3D_c* data structure is present in the corresponding *m_RouteSegmentData2D_c* for the corresponding flattened two dimensional version of the model. In a typical implementation, this step (628) may be performed by the computer 100 comparing the *m_RouteSegmentlD* value from the three-dimensional model to each *m_RouteSegmentID* value in the corresponding *m _RouteSegmentData3D_c* data structure. If the computer 100 (at 628) determines that the 3D route segment ID *m_RouteSegmentID* from the *m_RouteSegmentData3D_c* data structure is not present in the corresponding *m_RouteSegmentData2D_c,* the computer 100 (at 630) adds the missing route segment to a newly added collection (e.g., a group of route segments stored as data in memory that correspond to newly added route segments in the three-dimensional model and/or need to be represented by 2D route segments in the corresponding flattened two dimensional version of the model. After adding the missing route segment (at 630), the computer returns to step 626, increments i, and continues the process accordingly.

If the computer 100 determines (at 628) that the 3D route segment ID (e.g., *m_RouteSegmentID)* is present in the corresponding *m_RouteSegmentData2D_c* (e.g., because a matching *m_RouteSegmentID* was identified in *m_RouteSegmentData2D_c*), the computer 100 proceeds to 632 and determines whether the length of the three-dimensional route segment is different than the length of the corresponding two-dimensional route segment (the "!=" symbol in the flowchart means not equal). In a typical implementation, the computer 100 performs this function by comparing *m_RouteSegmentLength3D* to *m_RouteSegmentLength2D* for that route segment. If the computer 100 (at 632) determines that *m_RouteSegmentLength3D* matches *m_RouteSegmentLength2D,* then the computer 100 concludes that the length of the three-dimensional route segment is different than the length of the corresponding two-dimensional route segment (in which case the computer follows the "Y" branch in the flowchart). If the computer 100 (at 632) determines that *m_RouteSegmentLength3D* does not match *m_RouteSegmentLength2D,* then the computer 100 concludes that the length of the three-dimensional route segment is not different than the length of the corresponding two-dimensional route segment (in which case the computer follows the "N" branch in the flowchart).

If the computer 100 (at 632) concludes that the length of the three-dimensional route segment is different than the length of the corresponding two-dimensional route segment, then the computer 100 follows the "Y" branch in the flowchart and executes (at 634) a length accommodation procedure. The length accommodation procedure, an example of which is outlined in FIG. 8, provides for the incorporation of any changes in route segment length to the flattened two-dimensional version of the model. In a typical implementation, these changes are incorporated in a manner that tends to preserve visual layout characteristics from prior iterations of the flattened two-dimensional version of the model. After executing the length accommodation procedure (at 634) for that route segment, the computer 100, according to the FIG. 6 flowchart, returns to step 626, increments i, and continues the process accordingly.

If the computer 100 (at 626) that no further route segments remain (i.e., that all route segments in the three-dimensional model have been subjected to the functional loop associated with the 626 entry point, then the computer 100 (at 636) creates an updated version of the flattened two dimensional version of model. More specifically, the computer 100, according to the illustrated flowchart, creates the updated flattened two-dimensional version of the model by keeping editing changes based on the changed route segment collection. Additionally (also at 636), the computer 100 ensures that all *m_RouteSegment2D_c* is stored to the flattened route. After that, the computer 100 (potentially) follows the process to step 610 in the flowchart for further editing.

FIG. 8 is a flowchart that shows an implementation of a computer-implemented length accommodation procedure (634).

The procedure represented by the flowchart begins at 802 and the computer 100 (at 804) performs a process on change route segment data where only length has been modified. The processing at this step may be triggered, for example, if/when route segment length data has been modified. This may happen, for example, if the computer 100 (at 632) determines that the current value of *m_RouteSegmentLength3D* does not match the current value of *m_RouteSegmentLength2D.* In some implementations, this may happen, for example, if the computer 100 (at 632) determines that *m_RouteSegmentLength3D* does not match *m_RouteSegmentLength2D* and also determines that *m_StartPoint3DIndex* and *m_EndPoint3DIndex* in *m_RouteSegmentData3D_c* remain unchanged (e.g., relative to a previous iteration). More specifically, the computer 100 (at 804) may be triggered to perform associated processing for the changed length route segment and in response to the length of the route segment changing.

Next (at 806), the computer 100 calculates the change in length in the associated route segment. According to the illustrated flowchart, the computer 100 performs this function by calculating the difference between the length of the route segment in the two-dimensional environment (*m_RouteSegmentLength2D*) and the length of the route segment in the three-dimensional model (*"m _RouteSegmentLength3D"*)*.* For example, the computer 100, in this regard, may calculate (and optionally save in memory 104): length in 3D data - length in 2D.

Next, the computer 100 (at 808) determines whether the change in length (as calculated at 806) is greater than zero. If the route segment in the three-dimensional model was extended in length, as represented in FIG. 7 for example, then the change in length calculated (at 806) would be greater than zero, and the computer 100 would reach that conclusion (at 808). In that case, the computer 100 would proceed along the "Y" branch of the flowchart to step 810. If the route segment in the three-dimensional model was reduced in length, then the change in length calculated (at 806) would not be greater than zero (it would be less than zero), and the computer would reach that conclusion (at 808). In that case, the computer 100 would proceed along the "N" branch of the flowchart to step 826.

If the computer 100 concludes (at 808) that the change in length value (calculated at 806) is greater than zero, then the computer 100 (at 810) gets (e.g., retrieves or accesses from memory 104) the last 2D sketch segment from the corresponding *m_RouteSegmentData2D_c* data structure. Next (at 812), the computer 100 gets the route segment end point index *m_EndPoint2DIndex,* the last sketch segment's start point index and the last sketch segment's end point index (e.g., from the corresponding *m_RouteSegmentData2D_c* data structure). Based on this data, the computer 100 (at 814) calculates a translation vector (Vt) to define a direction and distance the end point of the last sketch segment should be moved and the last sketch segment should be changed (e.g., lengthened). The specific calculation performed in this regard, according to the illustrated example, is Vt = (*EndPointLoc - StartPointLoc*) ** Change in Length,* where *EndPointLoc - StartPointLoc* gives a direction vector from the start point of the last sketch segment to the end point of the last sketch segment, and *Change in Length* is a scalar representing how much the length of the last sketch segment has to change. In a typical implementation, the compute 100 calculates a change in length based on the difference between the current length in the modified three-dimensional model (e.g., m_RouteSegmentLength3D) and the length in the two-dimensional version of the model, prior to modification (e.g., m_RouteSegmentLength2D). Multiplying the direction vector by the scalar produces a scaled vector in the same direction as the direction vector, but with a magnitude that is equal to the calculated change in length.

The computer 100 (at 816) checks whether *RSegEndPoint* is equal to *SketchSegEndPoint.* If not (N), then the computer (at 818) reverses the direction of the calculated translation vector (Vt), by replacing the prior value of Vt with a new value with the equation Vt = Vt * -1.0. These steps (816 and 818) essentially determine a direction (along an axis defined by the Vt) for translating an endpoint of the last sketch segment (and lengthening the last sketch segment). The translation may be in a positive (e.g., lengthening segment lengthening) direction or a negative (e.g., segment shortening) direction. Next (at 820), the computer 100 moves the end point of the last sketch segment (e.g., 715 of 712) using the translation vector (Vt). The computer 100 (at 822) then finds any connected segments (e.g., one or more route segments that were connected to the end point being translated) and translates (e.g., lengthens) these using the translation vector.

FIG. 7 includes an image (labeled *Flattened Results in 2D*) showing an exemplary two dimensional version of three-dimensional model 700 having a particular visual layout. The illustrated two dimensional version of the model 700 shows the two route segments 702a, 702b of the model 700 and includes corresponding *m_RouteSegmentData2D_c* data structures. Route segment 704b, in the illustrated implementation, consists of more than one sketch segment, each of which would be identified in *m _ListofSketchSegments2D_c* of the corresponding *m_RouteSegmentData2D_c* data structure. Each sketch segment has a start point and an end point, which also may be represented in the corresponding *m_RouteSegmentData2D_c* data structure. The *Flattened Results in 2D* image in FIG. 7, for example, shows the last sketch segment 712 for route segment 704b, the start point 713 for that sketch segment 712, and the end point 715 for that sketch segment 712. To accommodate the changes in the corresponding three-dimensional model (i.e., the lengthening of route segment 704b), the computer 100 changes (increases) the length of sketch segment 712 (as reflected *Flattened update results with length accommodation with keeping previous edits* image in FIG. 7). As noted in the image, the modified image reflects the connected route segment (i.e., the route segment connected to the end point of the modified sketch segment) updated, with the change in length, at a new location.

Referring again to FIG. 8, the computer 100 updates the sketch (at 824), which produces a modified flattened two-dimensional version of the model as shown, for example, in the *Flattened updated results with length accommodation with keeping previous edits image* in FIG. 7. The computer 100 then (at 826) removes any route segment from the changed route segment array and the sub-process ends (at 828).

If the computer 100 determines (at 808) that the change in length (calculated at 806) is not greater than zero, then the computer 100 follows the "N" branch out of 808 and assigns a value *of false* to an *IsPointFound* flag (at 826). Initializing this variable in this regard indicates to the computer that a point, discussed further below, has been found. The initial value for this variable is set at false, because at this point in the process, the point at issue has not been found. The value of the flag can later be changed to *true* if, for example, the point at issue has been found. As indicated, the point may be found, if at all, in an array of sketch segments, represented by an *arrayofSketchSegment* data structure.

Next (at 828), the computer 100 enters into a functional loop by setting a loop variable i equal to a *SketchSegment2DSize,* where the loop will continue to run as long as the value for loop variable i is greater than zero (i>0), and after each loop iteration, the value for variable i is decreased by 1. *SketchSegment2DSize* is a numerical value that represents how many sketch segments are to be considered in iteratively executing the loop functionalities (until there are no more sketch segments to consider). In a typical implementation, *SketchSegment2DSize* is a numerical value that identifies the number of sketch segments in a two-dimensional version of a particular model (e.g., in a particular two-dimensional route segment of the model).

Next (at 830), the computer 100 processes a first sketch segment from the *m_ListofSketchSegments2D* for the corresponding two-dimensional route segment. In a typical implementation, the first sketch segment considered may be the last sketch segment (e.g., at the end) of the two-corresponding two-dimensional route segment. The processing may involve determining whether a particular point is found along the associated sketch segment. There may be a variety of ways to accomplish this functionality. In one example, the computer 100 compares coordinates of the point with coordinates that would fall between the ends of the corresponding sketch segment. This is represented in the flowchart by the notation Processing *Sketch Segment = m - ListofSketchSegments2D [i].*

If the computer 100 determines (at 832) that the point has been found (in the sketch segment just processed), then the computer 100 (at 834) adds the segment just processed into the array of sketch segments *(arrayofSketchSegment*) data structure. At that point, the computer 100 follows the process in the flowchart back to 828. If the computer 100 determines (at 832) that the point has not been found, the computer 100 (at 836) checks whether the current sketch segment length is greater than the *Change in Length* calculated at 806. If the computer 100 determines (at 836) that the current sketch segment length is not greater than the *Change in Length* calculated at 806, then the computer 100 (at 838) adds the *Change in Length* value to the Current Sketch Segment Length value and stores the resulting value back into *Change in Length* variable. The computer then (also as part of 838) deletes the segment from the sketch and follows the process in the flowchart back to 828. If the computer 100 (at 836) determines that the current sketch segment length is greater than the *Change in Length* calculated at 806, then the computer 100 (at 840) finds a point on the processing entity with the *Change in Length* value. The computer 100 then (also at 840) sets this found point at a "New End Point." The computer 100 (also at 840) adds the proceeding segment into the array of sketch segments (*arrayofSketchSegment*) and updates the *IsPointFound* flag to a value of *true.* The computer 100 (also at 840) calculates a translation vector (using techniques similar to those described herein) between the "New End Point" and the old end point. The computer 100 then (also at 840) moves any connected segments using the translation vector.

Next, the computer 100 (at 842) updates the *m_RouteSegmentData2D_c* data structure with a New Length, the New End Point, and the latest version of *arraySketchSegments.* The computer 100 then (at 824) updates the sketch accordingly. The computer 100 then (at 826) removes any route segment from the changed route segment array and the sub-process ends (at 828).

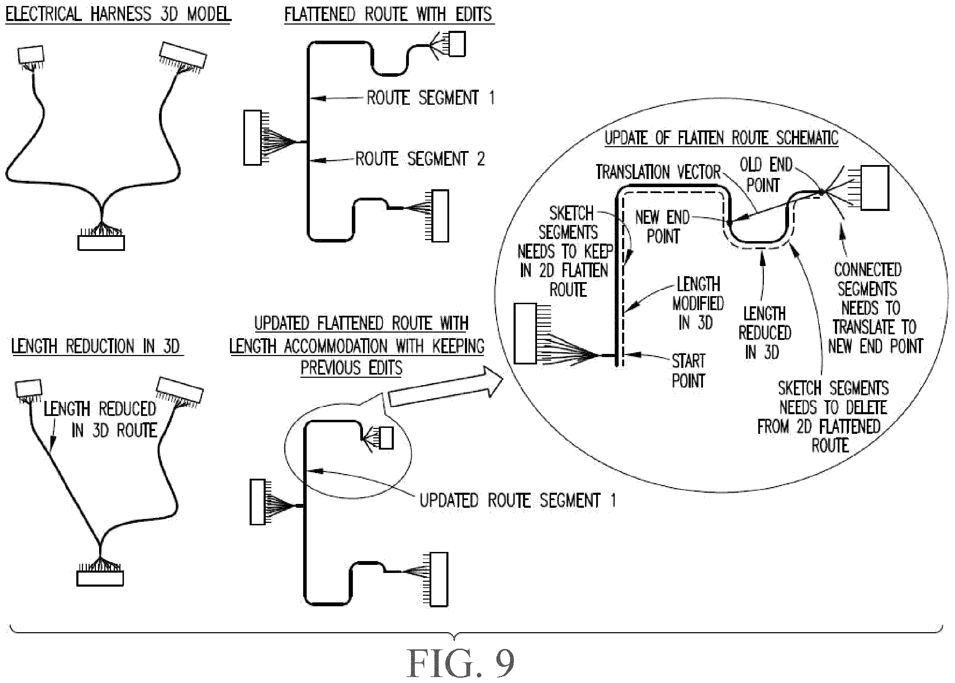

FIG. 9 shows an initial image of a three-dimensional model 900 in a three-dimensional modeling environment (labeled *Electrical Harness in 3D*)*,* a flattened, edited two-dimensional version of that three-dimensional model (labeled *Flattened Route with Edits*)*,* a subsequent image of the three-dimensional model 900 in the three-dimensional modeling environment showing one route segment 904a having been shortened (labeled *Length reduction in 3D*) in the three-dimensional modeling environment, and a subsequent flattened two-dimensional version of the three-dimensional model with the shortened route segment (labeled *Updated Flattened route with length accommodation with keeping previous edits*)*.* This is an example of changes that may be made, and a sequence of images that the computer 100 may display, sequentially, to a designer onscreen and in the order just described as the model evolves (e.g., when the designer creates the initial model in the three-dimensional modeling environment, flattens that design for display in a two-dimensional environment, subsequently decreases a length of one of the model's route segments in the three-dimensional modeling environment, and then flattens that). Of note is the fact that although the model 900 is changed in the three-dimensional modeling environment (e.g., by shortening one of the model's route segments), integrating those changes into a flattened two-dimensional version of the model does not significantly modify the overall visual layout of the flattened two-dimensional version of the model. In fact, aside from removing a portion of route segment 904a (to shorten that route segment's appearance in 2D) and translating certain drawing elements (e.g., connected segments, connector 902a, and the route segment end point), the visual layout of the rest of the flattened two-dimensional version of the model remains the same.

FIG. 9 also has a detailed schematic view (labeled *Update of flatten route schematic*) showing some of the changes and functionalities the computer 100 implements in making the indicated design changes in accordance with the processes set forth in FIG. 6 and FIG. 8. Specifically, this schematic representation shows the old (or original) end point (i.e., the end point of the route segment prior to shortening), the new (or revised) end point (i.e., the end point of the route segment after shortening), and the calculated translation vector (that represents a direction of translation of the end point from its original location to its new location). The view shows the connected segments (i.e., segments connected to the end point that is being relocated) also needing to move (and being moving by the computer 100) to be connected to the new end point at the new end point location. The view shows the sketch segment(s) that need to be deleted (and that the computer 100 does delete) to accommodate the end point translation. In a typical implementation, the computer 100 may make these route changes by changing data in memory (e.g., *m_RouteSegmentLength2D* and *m_EndPoint2DIndex*) associated with any affected route segments and/or deleting any removed route segments by deleting the associated data from memory (e.g., *m_RouteSegmentData2D_c*). Any length change (e.g., to *m_RouteSegmentLength2D*) may be made based on a comparison with a corresponding length change relative to the 3D version (e.g., *m_RouteSegmentLength3D*). As an example, the computer 100 may calculate the length change as *Length Change = m_RouteSegmentLength2D - m_RouteSegmentLength3D.* Once the computer 100 calculates *Length Change,* the computer may subtract Length Change from the corresponding value of *m_RouteSegmentLength2D* to produce a new value for *m_RouteSegmentLength2D,* a new version of the corresponding 2D route segment may be displayed with the same pattern, but different Length (and, therefore, different, and new end point). The view shows sketch segments that need to be kept (and that the computer 100 does keep) when shortening is labeled too.

Although one of the route segment lengths in FIG. 9 is being changed (from the *Electrical Harness in 3D* image to the *Length reduce in 3D Route* image), the three-dimensional locations and orientations of the connectors at the ends of the modified route segment remain unchanged. This kind of change causes the computer 100 to change the visual layout of the three-dimensional model being displayed and as discussed below, typically causes the computer 100 to update *m_RouteSegmentData3D_c* for any affected route segments. Specifically, *m_RouteSegmentLength3D* in *m_RouteSegmentData3D_c* is updated to reflect the decreased length of route segment 904a. In this particular example, since the locations and orientations of the connectors at the ends of the modified route segment remain unchanged, the values of *m_StartPoint3DIndex* and *m_EndPoint3DIndex* also remain unchanged.

The image (labeled *Flattened Route with Edits*) in FIG. 9 shows an exemplary two-dimensional version of three-dimensional model 900 in the *Electrical Harness 3D Model* image with a particular visual layout. The illustrated two dimensional version of the model 900 shows the two route segments 904a, 904b of the model 900 and includes corresponding *m_RouteSegmentData2D_c* data structures. Route segment 904a, in the illustrated implementation, consists of multiple sketch segments, each of which would be identified in *m_ListofSketchSegments2D_c* of the corresponding *m_RouteSegmentData2D_c* data structure. Each sketch segment has a start point and an end point, which also may be represented in the corresponding *m_RouteSegmentData2D_c* data structure. The illustrated visual layout has, according to the attached image, already been edited (to enhance the visual layout).

The image (labeled *Updated Flattened route with length accommodation with keeping previous edits*) in FIG. 9 shows an exemplary two-dimensional version of the three-dimensional model 900 in the *Length Reduction in 3D* image. The illustrated two dimensional version of the model 900 shows the two route segments 904a, 904b of the model 900 and includes corresponding *m_RouteSegmentData2D_c* data structures. Route segment 904a, in the illustrated implementation, has been shortened with its associated *m_RouteSegmentData2D_c* data structure having been updated accordingly.

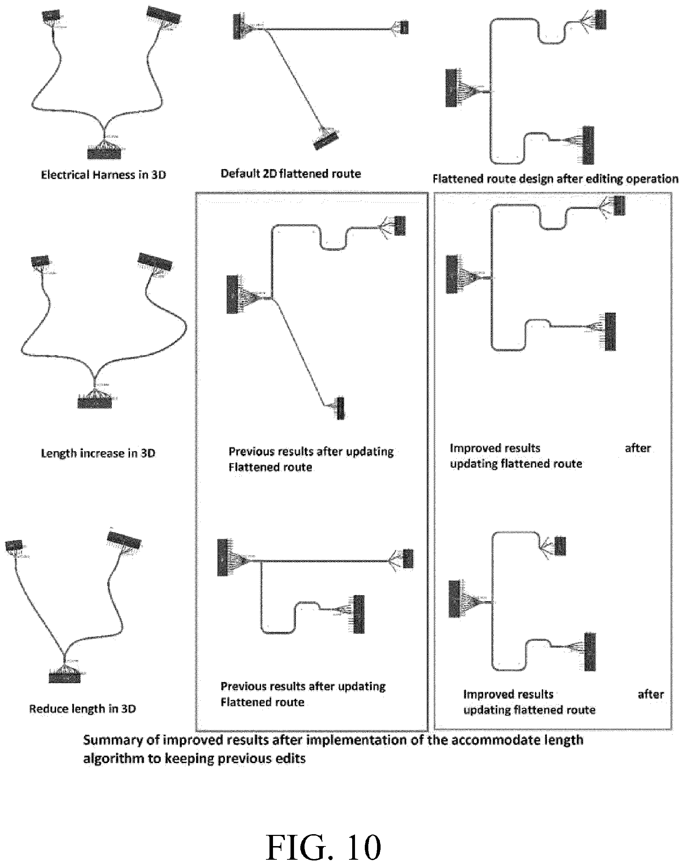

FIG. 10 is a collection of images that show a few examples of model changes and subsequent model flattening (with and without the systems and techniques disclosed herein) to illustrated the efficacy of the systems and techniques disclosed herein.

Specifically, the top row in the figure shows three images - an initial three-dimensional model of a wiring harness (labeled *Electrical Harness in 3D*)*,* a default flattened version of the three-dimensional model of the wiring harness (labeled *Default 2D flattened route*) and an edited version of the default flattened version of the three-dimensional model of the wiring harness (labeled *Flatten route design after editing operation*)*.* Once edited (as shown in the *Flatten route design after editing operation* image), it is generally desirable to minimize the need to redo those edits.

The next (second) row of images shows the three-dimensional model of a wiring harness with a lengthened route segment (labeled *Length increase in 3D*)*,* a flattened 2D version of the three- dimensional model of the wiring harness with the lengthened route segment without the benefit of the systems and techniques disclosed herein (labeled *Previous results after updating Flattened route*)*,* and an alternative flattened 2D version of the three-dimensional model of the wiring harness generated with the benefit of the systems and techniques disclosed herein (labeled *Improved results after updating flattened route*)*.* It is important to note that this second row of images represents what might happen under different scenarios (i.e., with and without the benefit of the systems and techniques disclosed herein) after the editing operations above (shown in the *Flattened route design after editing operation* image) when the three-dimensional model is modified and once again flattened. The images show that the flattened route produced with the systems and techniques disclosed herein (in the image labeled *Improved results after updating flattened route*) is far closer in visual layout to the originally edited version of the three-dimensional model (in the Flattened route design after editing operation image) than the visual layout in the *Previous results after updating Flattened route* image.

Similar, the third (or bottom) row of images shows the three-dimensional model of a wiring harness with a shortened route segment (labeled *Reduce length in 3D*)*,* a flattened 2D version of the three- dimensional model of the wiring harness with the lengthened route segment without the benefit of the systems and techniques disclosed herein (labeled *Previous results after updating Flattened route*)*,* and an alternative flattened 2D version of the three-dimensional model of the wiring harness generated with the benefit of the systems and techniques disclosed herein (labeled *Improved results after updating flattened route*)*.* It is important to note that this third row of images represents what might happen under different scenarios (i.e., with and without the benefit of the systems and techniques disclosed herein) after the editing operations above (shown in the *Flattened route design after editing operation* image) when the three-dimensional model is modified and once again flattened. The images show that the flattened route produced with the systems and techniques disclosed herein (in the image labeled *Improved results after updating flattened route*) is far closer in visual layout to the originally edited version of the three-dimensional model (in the *Flattened route design after editing operation image*) than the visual layout in the *Previous results after updating Flattened route* image.

In view of the foregoing, it can be seen that, in an exemplary implementation, if a user (e.g., a designer) changes the length of the route segments in a 3D Route of an electrical harness and wants to update these changes to a flattened route version by switching the configuration then an implementation of the systems and techniques disclosed herein identifies the changed route segment by comparing the *m_routeSegment3D_c* and the *m_routeSegment2D_c* data structures. The computer 100, in some such implementations, may identify a route segment whose length only has been modified in the 3D model. The computer 100 may identify this by applying deductive logic in analyzing data stored in the *m_routeSegment3D*_*c* and *m_routeSegment2D_c* datasets. In a length accommodation case, route segment length may be different in the two data structures, but the 3D end Points index i.e., *m_StartPoint3DIndex* and *m_EndPoint3DIndex* may be the same in the 3D route segments data structure and the 2D route segment data structure.

In a typical implementation of the systems and techniques disclosed herein, once a particular model of a wiring harness is deemed completed (e.g., by the designer or design team) and potentially designated as such in computer memory, and one or more final flattened two-dimensional versions of the model (e.g., formboard drawing(s)) have been produced (and potentially designated as final in computer memory), the designer may provide the formboard drawings to a manufacturer and the manufacturer may use real world machinery to manufacture a real world version of the object or system represented by the model (e.g., a real world wiring harness), based, at least primarily if not entirely, on the formboard drawing(s) thereof. This manufacturing process may include, for example, obtaining the materials (e.g., wires, bundling material, clips, tape, connectors, etc.), cutting and stripping the wires, routing, assembling, and grouping the wires, attaching connectors, etc. using real world machines and in response to directions in the formboard drawings.

A number of embodiments of the invention have been described. Nevertheless, it will be understood that various modifications may be made without departing from the spirit and scope of the invention.

For example, the systems and techniques disclosed herein have been described as being applied to the design of wiring harnesses (e.g., electrical wiring harnesses). However, the systems and techniques are not necessarily limited to that application. In essence, they can be applied to design, and subsequently build, any other real world object, especially ones that include physical elements (e.g., tubes, fiber optics, etc.) that may need to be routed through real-world spaces, bundled, and/or interconnected to other real world objects.

As disclosed herein, wiring harness design typically involves designing or developing a 3D model of the wiring harness in a virtual three-dimensional modeling environment. Ultimately and typically, the resulting 3D model is flattened via a computer implemented flattening functionality that flattens the model to a 2D viewing (e.g., not modeling) environment where the resulting flattened 2D version of the model appears on single plane. The flattened 2D version of the model has a visual layout that the designer may modify by interacting with one or more interface elements that the computer may make available in the 2D viewing environment. The design process may be an iterative one where multiple editing operations are needed and implemented in the 3D environment (that facilitates changes to the 3D model) and the 2D viewing environment (that facilitates changes to the 2D visual layout). In a typical implementation, the computer 100 described herein preserves visual layout information and edits to same made to previous iterations in updates of the flattened route (e.g., to incorporate model updates) to achieve the accuracy and readability for formboard drawing. Variations are possible.

The phrase computer-aided design should be construed broadly to include any computer-based software for designing, engineering, simulating, and/or flattening designs or the like.

The specific processes for accommodating a modified route segment length in generating an updated flattened two-dimensional version of a model may vary. In general, if a designer changes the length of a route segment in the three-dimensional modeling environment and initiates a process (e.g., switch the configuration) whereby the computer 100 will generate an updated version of the corresponding flattened two-dimensional version of the model, then the computer 100 typically identifies the changed route segment by comparing the *m_routeSegment3D_c* data structure to the *m_routeSegment2D_c* data structure. Additionally, while implementing accommodate length processes disclosed herein, the computer 100 may identify a route segment whose length has been modified (without also modifying the start point and end point of the route segment) in 3D Route, by applying logic to the data stored in the *m_routeSegment3D_c* data structure and the m*_routeSegment2D_c* data structure. In such a length accommodation case, the computer 100 would determine that the route segment length is different but that the 3D end Point indices (i.e., *m_StartPoint3DIndex & m_EndPoint3DIndex*) are identical in both the 3D route segment data and 2D route segment data. The computer 100 typically calculates the change in length in such cases based on a difference between the current actual length *i.e.,* the 3D length and the old length *i.e.,* the 2D length. This change in length will be either positive or negative. If the change in length is positive, the computer 100 concludes that the route segment length has been increased in 3D. If the change in length is negative, the computer 100 concludes that the route segment length has been reduced in 3D. Variations, however, are possible. For example, the data that the computer 100 evaluates in this regard may be stored in any number of a variety of different formats. Additionally, in various implementations, the computer may identify route segments whose length has changed in other ways. Variations are possible.

The specific processes for how to accommodate an identified increase in route segment length when generating a flattened two-dimensional version of a model can vary. In a typical implementation, as disclosed herein, the computer 100 accommodates the change in length at end of the route segment to facilitate keeping a prior visual layout (and any changes thereto) in the flattened configuration. In a typical implementation, the computer 100 may do this by selecting the last sketch segment of the changed route segment from the *m_routeSegment2D_c* data structure. The computer 100 moves or translates the end point of the route segment is in a tangential direction of the last sketch segment. In an exemplary implementation, this involves the computer 100 calculating a translation vector for transforming last sketch segment, where the translation vector may be calculated from an end point location to a start point location. This translation transformation may be applied to all connected route segments attached to the end point so that these will have proper connection after translation of the end point. Updated route segments may be removed from the changed route segment collection as length is updated to the 2D data. Variations, however, are possible. For example, the specific process for calculating the translation vector may vary.

The specific processes for how to accommodate an identified increase in route segment length when generating a flattened two-dimensional version of a model can vary. In an exemplary implementation, the computer 100 may trace sketch segments from an end point of the identified route segment to find a new end point, along that route segment, where the length of the route segment would match the shortened length of the route segment from the 3D data. The computer 100, in some implementations, may then calculate a length required to reduce that segment as the difference between the route segment length from 3D data and route segment length from 2D data. Length to reduce may be important while traversing from end sketch segments. If a current sketch segment's length is less than length to reduce then the computer 100, in a typical implementation, deletes this sketch segment from the sketch (and the associated 2D data structure) and the length to reduce is updated by adding current sketch segment length into it. This process may be repeated until the current sketch segment's length is greater than length to reduce. Once this condition exists, then the computer 100 calculates a point from end point of current sketch segment with a length to reduce value (*getPointAtLength()* function, which generally gets the coordinates (e.g., x, y) of a point at a specific distance (length) along a path, may be used to calculate the new point location). The current segment and other remaining sketch segments may be stored by the computer 100 in the sketch segment collection in the corresponding data structure. The sketch segment collection and the new end point is then updated to *the m_routeSegment_2D* data structure. And the route segment may be removed from the changed route segment collection. In an exemplary implementation, the computer calculates a translation vector/transformation between the new end point location and old end point location. Translation transformation is used to update the location of connected route segments, which are attached to the old end point. Variations are possible.

The systems and techniques can be applied to accommodate changes in length in open ended or non-open ended route segments.

In various implementations, one or more computer components disclosed herein (e.g., applications, design tools, flattening tools, etc.) can be implemented by one or more computer-based processors (referred to herein as processor) executing computer-readable instructions stored on non-transitory computer-readable medium to perform the associated computer-based functionalities. The one or more computer-based processors can be virtually any kind of computer-based processors and can be contained in one housing or distributed at different locations, and the non-transitory computer-readable medium can be or include any one or more of a variety of different computer-based hardware memory / storage devices either contained in one housing or distributed at different locations.

Certain functionalities are described herein as being accessible or activated by a user selecting an onscreen button or the like. This should be construed broadly to include any kind of visible, user-selectable element or other user interactive element (or combinations thereof).

The systems and techniques disclosed herein can be implemented in a number of different ways. In one exemplary implementation, the systems and techniques disclosed herein may be incorporated into the Solidworks^{®} computer program available from Dassault Systèmes, the applicant of the current application. In various implementations, the systems and techniques can be deployed otherwise.

It should be understood that the example embodiments described herein may be implemented in many different ways. In some instances, the various methods and machines described herein may each be implemented by a physical, virtual, or hybrid general purpose computer, such as a computer system, or a computer network environment, such as those described herein. The computer / system may be transformed into the machines that execute the methods described herein, for example, by loading software instructions into either memory or non-volatile storage for execution by the CPU. One of ordinary skill in the art should understand that the computer / system and its various components may be configured to carry out any embodiments or combination of embodiments of the present invention described herein. Further, the system may implement the various embodiments described herein utilizing any combination of hardware, software, and firmware modules operatively coupled, internally, or externally, to or incorporated into the computer / system.

Various aspects of the subject matter disclosed herein can be implemented in digital electronic circuitry, or in computer-based software, firmware, or hardware, including the structures disclosed in this specification and/or their structural equivalents, and/or in combinations thereof. In some embodiments, the subject matter disclosed herein can be implemented in one or more computer programs, that is, one or more modules of computer program instructions, encoded on computer storage medium for execution by, or to control the operation of, one or more data processing apparatuses (e.g., processors). Alternatively, or additionally, the program instructions can be encoded on an artificially generated propagated signal, for example, a machine-generated electrical, optical, or electromagnetic signal that is generated to encode information for transmission to suitable receiver apparatus for execution by a data processing apparatus. A computer storage medium can be, or can be included within, a computer-readable storage device, a computer-readable storage substrate, a random or serial access memory array or device, or a combination thereof. While a computer storage medium should not be considered to be solely a propagated signal, a computer storage medium may be a source or destination of computer program instructions encoded in an artificially generated propagated signal. The computer storage medium can also be, or be included in, one or more separate physical components or media, for example, multiple CDs, computer disks, and/or other storage devices.

Certain operations described in this specification (e.g., aspects of those represented in FIGS. 6 and 8, and otherwise disclosed herein) can be implemented as operations performed by a data processing apparatus (e.g., a processor / specially programmed processor / computer) on data stored on one or more computer-readable storage devices or received from other sources, such as the computer system and/or network environment described herein. The term "processor" (or the like) encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, for example, code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing, and grid computing infrastructures.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations may be described herein as occurring in a particular order or manner, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Other implementations are within the scope of the claims.

## Claims

1. A computer-implemented method comprising:
- generating, in a virtual two-dimensional viewing environment, a flattened, two-dimensional visual representation of an initial three-dimensional model of a wiring harness, wherein the flattened, two-dimensional representation of the initial three-dimensional model has an initial visual layout in the virtual two-dimensional viewing environment;
- subsequently modifying the initial three-dimensional model in a virtual three-dimensional modeling environment to generate a modified three-dimensional model, wherein a route segment of the wiring harness represented in the modified three-dimensional model has a different length than a corresponding route segment of the wiring harness in the initial three-dimensional model; and
- generating, in the virtual two-dimensional viewing environment, a flattened, two-dimensional visual representation of the modified three-dimensional model, wherein the flattened two-dimensional visual representation of the modified three-dimensional model has the route segment length of the modified three-dimensional model and otherwise has the visual layout of the flattened, two-dimensional representation of the initial three-dimensional model.

2. The computer-implemented method of claim 1, wherein generating the flattened, two-visual dimensional representation of the initial three-dimensional model of the wiring harness comprises:
- generating, in the virtual three-dimensional modeling environment, the initial three-dimensional model of the wiring harness;
- flattening the initial three-dimensional model of the wiring harness to produce a flattened version of the three-dimensional model having a default visual layout; and
- editing the default visual layout to produce the flattened, two-visual dimensional representation of an initial three-dimensional model of a wiring harness having the initial layout.

3. The computer-implemented method of claim 1 or 2, further comprising:
- storing, in computer memory, a model data structure logically associated with each respective one of the three-dimensional route segments represented in a model, wherein the model data structure identifies a route segment identifier, a three-dimensional route segment length, a three-dimensional route segment start point, a three-dimensional route segment end point, and list of three-dimensional sketch segments that make up the route segment; and
- storing, in the computer memory, a flattened route data structure logically associated with each respective one of the two-dimensional route segments represented in a flattened, two-dimensional visual representation of a model, wherein the flattened route data structure identifies the route segment identifier of a corresponding route segment from a corresponding model, a flattened route segment length, a two-dimensional route segment start point, a two-dimensional route segment end point, a three-dimensional route segment start point for the corresponding route segment from the corresponding model, a three-dimensional route segment end point for the corresponding route segment from the corresponding model, and list of two-dimensional sketch segments that make up the two-dimensional route segment.

4. The computer-implemented method of claim 3, further comprising:
- updating the model data structure after modifying the initial three-dimensional model in a virtual three-dimensional modeling environment to generate the modified three-dimensional model, but before generating, in the virtual two-dimensional viewing environment, the flattened, two-dimensional visual representation of the modified three-dimensional model.

5. The computer-implemented method of claim 4, wherein generating the flattened, two-dimensional visual representation of the modified three-dimensional model comprises:
- comparing the updated model data structure to the flattened route data structure to identify a route segment change in the modified three-dimensional model relative to the flattened, two- dimensional visual representation of an initial three-dimensional model; and
- subsequently updating the flattened route data structure to produce an updated flatten route data structure that reflects the route segment change identified in the comparison.

6. The computer-implemented method of claim 5, wherein the flattened, two-dimensional visual representation of the modified three-dimensional model is generated based on the updated flatten route data structure.

7. The computer-implemented method of claim 5, further comprising setting a flag in the computer memory to indicate that a length of a particular one of the route segments has changed in response to the comparison identifying that:
- the route segment ID associated with the particular route segment is in the model data structure and in the flattened route data structure,
- the three-dimensional route segment start point associated with the particular route segment is identical in the model data structure and in the flattened route data structure;
- the three-dimensional route segment end point associated with the particular route segment is identical in the model data structure and in the flattened route data structure; and
- the three-dimensional route segment length in the updated model data structure associated with the particular route segment is different than the flattened route segment length in the flattened route data structure associated with the particular route segment.

8. The computer-implemented method of claim 7, further comprising:
- computing a change in length for the particular route segment in the modified three-dimensional model relative to a prior iteration of the three-dimensional model, based on a difference between the three-dimensional route segment length in the updated model data structure associated with the particular route segment and the flattened route segment length in the flattened route data structure associated with the particular route segment; and
- identifying whether the change in length was a lengthening or shortening based on whether the change in length computation produced a negative or positive result.

9. The computer-implemented method of claim 8, wherein, if the change in length was identified as a lengthening, then generating the flattened, two-dimensional visual representation of the modified three-dimensional model accommodates the change in length with a process comprising:
- selecting a last one of the sketch segments in the list of two-dimensional sketch segments for the flatten route data structure for the particular route segment;
- identifying a translation vector direction by subtracting a two-dimensional start point for the last one of the sketch segments stored in the computer memory from a two-dimensional end point for the last one of the sketch segments stored in the computer memory; and
transforming a position of the two-dimensional route segment end point for the particular route segment a distance that corresponds to the computed change in length and in the identified translation vector direction.

10. The computer-implemented method of claim 9, further comprising:
- transforming a position of any other route segments connected to the two-dimensional route segment end point for the particular route segment by a distance that corresponds to the computed change in length and in the identified translation vector direction.

11. The computer-implemented method of claim 8, further comprising:
- tracing the route segment from the two-dimensional route segment end point to a new end point that is a distance from the two-dimensional route segment start point that is the same as the three-dimensional route segment length from the model data structure, if the change in length was identified as a shortening.

12. The computer-implemented method of claim 11, further comprising:
- determining whether a length of the last sketch segment, which is stored in the computer memory, for the particular route segment is shorter than the computed change in length; and removing the last sketch segment from the list of two-dimensional sketch segments in the flattened route data structure, in response to determining that the length of the last sketch segment in the particular route segment is shorter than the computed change in length.

13. The computer-implemented method of claim 12, further comprising:
- working back from the last sketch segment, removing one or more additional sketch segments from the list of two-dimensional sketch segments until a determination is made that a particular one of the sketch segments is long enough that it contains a point that would correspond with the computed change in length; and
- calculating the new end point location from an end point of that particular one of the sketch segments.

14. The method of claim 13, further comprising:
- updating the list of two-dimensional sketch segments to include only sketch segments that have not been removed, and to include a new value for the two-dimensional route segment end point in the flattened route data structure based on the new end point location.

15. The computer-implemented method of claim 14, further comprising:
- calculating a translation vector between the new end point location and the end point location immediately prior to the new end point location; and
- updating a location of any additional route segments that were connected to the end point according to the calculated translation vector.

16. The computer-implemented method of any one of claims 1 to 15, further comprising:
- manufacturing a real world version of the wiring harness in the modified three-dimensional model based on the flattened, two-dimensional visual representation of the modified three-dimensional model.

17. A computer program comprising instructions which, when the program is executed by a computer, cause the computer to carry out the method of any one claims 1 to 16.

18. A system comprising:
a computer comprising:
a computer processor; and
computer-based memory operatively coupled to the computer processor, wherein the computer-based memory stores computer-readable instructions that, when executed by the computer processor, cause the computer system to perform the method of any one of claims 1 to 16.
